# EUROPEAN PATENT APPLICATION

(11) **EP 4 622 208 A1**
(43) Date of publication of application: **24.09.2025**
(21) Application number: 23902285.8
(22) Date of filing: 23.10.2023
(51) Int. Cl.: H04L 43/0852

(54) **DELAY DETERMINATION METHOD AND APPARATUS, AND INTELLIGENT DRIVING DEVICE**

(30) Priority: 14.12.2022 CN 202211606335
(71) Applicant: Shenzhen Yinwang Intelligent Technologies Co., Ltd., Shenzhen, Guangdong 518129 (CN)
(72) Inventor: GUAN, Gaoyang, Shenzhen, Guangdong 518129 (CN); CHEN, Ruining, Shenzhen, Guangdong 518129 (CN); WANG, Qiangdong, Shenzhen, Guangdong 518129 (CN)
(74) Representative: MERH-IP Matias Erny Reichl Hoffmann Patentanwälte PartG mbB
(86) International application number: PCT/CN2023/125856
(87) International publication number: WO 2024/125085

(57) **Abstract**

This application provides a delay determining method and apparatus, and an intelligent driving device. The method includes: when a tail service node on a first data flow link sends a message including a first control instruction, or when the tail service node receives a message used to generate the first control instruction, obtaining a first message sent by the tail service node, and recording a first moment at which the first message is obtained; obtaining first delay information from the first message, where the first delay information is used to determine a second moment at which a head service node on the first data flow link sends first data, and the first data is used to generate the first control instruction; and determining a first end-to-end delay of the first data flow link based on the first moment and the second moment. The method in this application may be applied to an autonomous vehicle like an intelligent vehicle or an electric vehicle. For a user, the delay determining method is simple and easy to use, and has low learning costs.

## Description

This application claims priority to Chinese Patent Application No. 202211606335.9, filed with the China National Intellectual Property Administration on December 14, 2022 and entitled "DELAY DETERMINING METHOD AND APPARATUS, AND INTELLIGENT DRIVING DEVICE", which is incorporated herein by reference in its entirety.

### TECHNICAL FIELD

This application relates to the field of communication technologies, and more specifically, to a delay determining method and apparatus, and an intelligent driving device.

### BACKGROUND

An end-to-end delay in an autonomous driving system and service is a duration from a moment at which a sensor sends collected data to a moment at which a controller sends a control instruction after task processing such as sensing, fusion, planning, and control on a data flow link. The end-to-end delay may reflect a response speed of autonomous driving.

Currently, a large quantity of optimizations for the autonomous driving system and service focus on the end-to-end delay or a partial delay on the data flow link. In a running process of a vehicle, a real-time determined end-to-end link delay of the autonomous driving service may indicate timely adjustment, correction, and restoration for the service. This is crucial to safety of the autonomous driving system.

In view of this, a simple and easy-to-use delay calculation solution urgently needs to be developed.

### SUMMARY

This application provides a delay determining method and apparatus, and an intelligent driving device, to determine an end-to-end delay of a key data flow link without key data flow link information provided by a user. This helps reduce user learning costs in a process of determining the end-to-end delay.

According to a first aspect, a delay determining method is provided. The method may be performed by an intelligent driving device, or may be performed by a computing platform of an intelligent driving device, or may be performed by a chip or a circuit used in an intelligent driving device. This is not limited in this application.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation means like an airplane or a ship.

The method includes: when a tail service node on a first data flow link sends a message including a first control instruction, or when the tail service node receives a message used to generate the first control instruction, obtaining a first message sent by the tail service node, and recording a first moment at which the first message is obtained; obtaining first delay information from the first message, where the first delay information is used to determine a second moment at which a head service node on the first data flow link sends first data, and the first data is used to generate the first control instruction; and determining a first end-to-end delay of the first data flow link based on the first moment and the second moment.

In the foregoing technical solution, delay information (for example, information for the second moment) may be passed on the first data flow link to the tail service node. In this way, the end-to-end delay of the first data flow link on which the tail service node is located can be determined based on information received from the tail service node, without data flow link information provided by the user. This is simple and easy to use, and has low learning costs for the user.

In some possible implementations, before the first message sent by the tail service node is obtained, the tail service node on the first data flow link is determined. For example, the tail service node and the first data flow link may be determined based on information about the head service node and the tail service node that is provided by the user. For another example, the head service node and the tail service node may be determined based on a preset keyword, to determine the first data flow link.

In some possible implementations, before the first message sent by the tail service node is obtained, all service nodes on the first data flow link are configured, so that each service node other than the head service node and tail service node can pass delay information (for example, the information for the second moment) of the head service node to a next service node, and finally to the tail service node.

For example, the first data flow link is a key data flow link.

For example, the message used to generate the first control instruction may include information associated with the first data.

With reference to the first aspect, in some implementations of the first aspect, the head service node includes a first node and a second node. The first delay information is used to determine the second moment at which the first node sends the first data and a third moment at which the second node sends second data. The second data is used to generate the first control instruction. The determining a first end-to-end delay of the first data flow link based on the first moment and the second moment includes: determining a first delay of a first sub-link based on the first moment and the second moment, where the first sub-link includes the first node and the tail service node; determining a second delay of a second sub-link based on the first moment and the third moment, where the second sub-link includes the second node and the tail service node; and determining the first end-to-end delay based on the first delay and the second delay.

In some possible implementations, the first delay information may be generated by communication middleware of an intermediate service node at a joint between the first sub-link and the second sub-link. It may be understood that the intermediate service node may include two or more receiving ports and one sending port.

It may be understood that the tail service node needs to generate the first control instruction based on the first data and the second data. Therefore, when the end-to-end delay including the data flow link on which the tail service node is located is calculated, delay data of the first node and the second node needs to be considered.

In some possible implementations, if the tail service node receives, at a same moment, a message associated with the first data and a message associated with the second data, "when the tail service node receives a message used to generate the first control instruction" means the foregoing moment. Alternatively, if the tail service node receives, at the first moment, a message associated with the first data, and receives, at the second moment, a message associated with the second data, "when the tail service node receives a message used to generate the first control instruction" means the first moment and the second moment. In other words, when the first data flow link includes a plurality of head service nodes, "when the tail service node receives a message used to generate the first control instruction" means a moment at which the tail service node receives a message associated with data of a head service node each time.

The "message associated with the first data (or the second data) "may include: a message including the first data (or the second data) and/or a message including information determined based on the first data (or the second data).

In the foregoing technical solution, when the first data flow link includes a plurality of head service nodes, the first delay information may include delay information (for example, the information for the second moment and information for the third moment) of the plurality of head service nodes, so that a delay determining apparatus can determine an end-to-end delay of each sub-link in the multi-source data flow link with low overheads and high efficiency based on the first delay information. The first end-to-end delay includes the end-to-end delay of each sub-link.

With reference to the first aspect, in some implementations of the first aspect, the head service node includes a third node and a fourth node. The first delay information is used to determine the second moment at which the third node sends the first data. The method further includes: obtaining second delay information based on the first delay information. The second delay information is used to determine a fourth moment at which the fourth node sends third data, and the third data is used to generate the first control instruction. The determining a first end-to-end delay of the first data flow link based on the first moment and the second moment includes: determining a third delay of a third sub-link based on the first moment and the second moment, where the third sub-link includes the third node and the tail service node; determining a fourth delay of a fourth sub-link based on the first moment and the fourth moment, where the fourth sub-link includes the fourth node and the tail service node; and determining the first end-to-end delay based on the third delay and the fourth delay.

In the foregoing technical solution, when the first data flow link includes a plurality of head service nodes, the first delay information may include delay information (for example, the information for the second moment) of any one of the plurality of head service nodes, so that a delay determining apparatus can determine the second delay information based on the first delay information, and further determine an end-to-end delay of each sub-link in the multi-source data stream link. The first end-to-end delay includes the end-to-end delay of each sub-link.

When there are excessive head service nodes on the multi-source data flow link, delay information of all the head service nodes is written into a to-be-transmitted message. Consequently, a data packet of the message may be excessively large, and overheads required for message transmission are high. In this case, the delay information of all the head service nodes may be carried by the second delay information, so that the second delay information is determined based on the first delay information. When there is a small quantity of head service nodes on the multi-source data flow link (for example, there are only two or three head service nodes), or a merge node on the multi-source link is close to the tail service node, or the quantity flow link is short, delay information of all the head service nodes may be written into a to-be-transmitted message, to avoid determining the second delay information by using the first delay information. This can reduce calculation complexity and calculation overheads of calculating the end-to-end delay.

With reference to the first aspect, in some implementations of the first aspect, the second delay information is generated when a first receiving port and/or a second receiving port of an intermediate service node receive/receives the message. The intermediate service node is a service node shared by the third sub-link and the fourth sub-link. The first receiving port is configured to receive a message transmitted on the third sub-link, and the second receiving port is configured to receive a message transmitted on the fourth sub-link.

In some possible implementations, the first receiving port receives the message first, and then the second receiving port first receives the message. In this case, the second delay information is generated when the second receiving port of the intermediate service node receives the message.

In some possible implementations, the sending port of the intermediate service node sends a message to a next service node, where the message includes the message associated with the first data and a message associated with the third data. In this case, the message includes delay information (for example, the information for the second moment) of the third node. Alternatively, the sending port of the intermediate service node sends a message to a next service node, where the message includes the message associated with the first data or a message associated with the third data. In other words, the intermediate service node separately sends the message associated with the first data and the message associated with the third data to the next node. In this case, both of the messages sent by the intermediate service node need to include delay information of the third node (for example, the information for the second moment) or delay information of the fourth node (for example, information for the fourth moment). In other words, the message sent by the intermediate service node to the tail service node may include delay information of any head service node.

In the foregoing technical solution, communication middleware of the intermediate service node generates the second delay information. This helps reduce transmission overheads required for transmitting the delay information of the head service node, and helps improve efficiency of determining the end-to-end delay of each sub-link in the multi-source data flow link.

With reference to the first aspect, in some implementations of the first aspect, the determining a first end-to-end delay of the first data flow link includes: determining a first statistical indicator based on first user configuration information; and determining the first end-to-end delay based on the first statistical indicator. The first statistical indicator is associated with at least one of the following: an average delay of the first data flow link, a maximum response delay of the first data flow link, and a minimum response delay of the first data flow link.

In the foregoing technical solution, the statistical indicator may be mapped to a predefined end-to-end delay determining method based on the configuration information input by the user, to calculate the end-to-end delay that the user pays attention to. A user-friendly and easy-to-use statistical indicator is used to describe the end-to-end delay that the user pays attention to. This helps improve user experience.

With reference to the first aspect, in some implementations of the first aspect, the first data flow link further includes a first service node and a second service node, and before the obtaining a first message sent by the tail service node on the first data flow link, the method further includes: write information about the second moment at which the head service node sends the first data into a second message sent by the first service node to the second service node.

In the foregoing technical solution, a service node other than the head service node and tail service node on the first data flow link may pass the delay information of the head service node to the tail service node, so that the end-to-end delay of the first data flow link is determined, without obtaining the information about the first data flow link and without obtaining the delay information from each service node on the first data flow link. This helps improve efficiency of calculating the end-to-end delay. In addition, if the end-to-end delay is calculated by using the delay information obtained from each service node, due to problems such as packet loss and disorder in a data transmission process, the end-to-end delay obtained through calculation may be inaccurate, or may not be an end-to-end delay desired by the user. Based on the foregoing technical solution, impact of packet loss and disorder on calculating the end-to-end delay can be reduced. This helps improve accuracy of calculating the end-to-end delay.

With reference to the first aspect, in some implementations of the first aspect, the first delay information is generated based on the first data flow link, and the method further includes: determining the first data flow link based on the head service node and the tail service node.

For example, in a running process of the service node, the first data flow link may be determined based on the head service node and the tail service node according to a classical graph theory algorithm or a data mining algorithm.

For example, when the service node is not running, the first data flow link may be determined by performing data coloring analysis on source code of an autonomous driving service based on the head service node and the tail service node.

In some possible implementations, the head service node and the tail service node may be determined based on a preset keyword.

In the foregoing technical solution, the data flow link may be determined based on the information about the head service node and the tail service node, without the data flow link information provided by the user. This is simple and easy to use, and has low learning costs for the user.

With reference to the first aspect, in some implementations of the first aspect, before the determining the first data flow link, the method further includes: determining the head service node and/or the tail service node based on second user configuration information.

In some possible implementations, the second user configuration information and the first user configuration information are configuration information input by the user at a same moment.

In the foregoing technical solution, the head service node and/or the tail service node are/is determined by using the user configuration information, and the delay determining apparatus does not need to infer the head service node and the tail service node. This reduces calculation complexity and calculation overheads in a delay determining process.

With reference to the first aspect, in some implementations of the first aspect, before the determining the first data flow link, the method further includes: obtaining information about a message channel of a third service node on the first data flow link; and determining a dependency relationship of the third service node. The determining the first data flow link includes: determining the first data flow link based on the head service node, the tail service node, the information about the message channel of the third service node, and the dependency relationship of the third service node.

In the foregoing technical solution, the first data flow link can be obtained through analysis without running the service node.

With reference to the first aspect, in some implementations of the first aspect, the method is performed by an autonomous driving operating system.

In the foregoing technical solution, a stub is used in the autonomous driving system, so that the autonomous driving system performs end-to-end delay calculation. It can be learned that, in the foregoing method, it is not necessary to use a stub in the autonomous driving service. In other words, the source code of the autonomous driving service does not need to be modified. This can reduce impact on functional safety and a performance indicator of service code, and help determine the end-to-end delay of the key data flow link on a premise that the functional safety of the autonomous driving service is ensured.

With reference to the first aspect, in some implementations of the first aspect, the autonomous driving operating system is associated with at least one of the following: an automotive open system architecture communication management AUTOSAR CM module and a robot operating system ROS.

For example, that the autonomous driving operating system is associated with the AUTOSAR CM and/or the ROS may include: The autonomous driving operating system runs based on an AUTOSAR CM and/or a ROS communication protocol stack.

For example, the ROS may be a ROS 1 or a ROS 2.

In the foregoing technical solution, the AUTOSAR CM protocol stack and the ROS protocol stack are designed in a unified manner. When the autonomous driving operating system relates to both the AUTOSAR CM protocol stack and the ROS protocol stack, the delay determining method does not need to be changed. In this way, online end-to-end delay calculation can be performed on service nodes of the two protocol stacks at the same time.

According to a second aspect, a delay determining method is provided. The method includes: when a tail service node on a first data flow link sends a message including a first control instruction, or when the tail service node receives a message used to generate the first control instruction, obtaining first delay information associated with the tail service node, and recording a first moment at which the first delay information is obtained, where the first delay information is used to determine a second moment at which a head service node on the first data flow link sends first data, and the first data is used to generate the first control instruction; and determining a first end-to-end delay of the first data flow link based on the first moment and the second moment.

For example, the "obtaining first delay information associated with the tail service node" may include: obtaining the first delay information from the message that is received by the tail service node and that is used to generate the first control instruction, or obtaining, from a specific delay channel, a first message sent by the tail service node, where the first message includes the first delay information. In this case, the first moment at which the first delay information is obtained is a moment at which the first message sent by the tail service node is obtained.

With reference to the second aspect, in some implementations of the second aspect, the method may further include the method in one or some possible implementations of the first aspect. Details are not described herein again.

According to a third aspect, a delay determining apparatus is provided, including a first obtaining unit, a recording unit, a second obtaining unit, and a first determining unit. The first obtaining unit is configured to: when a tail service node on a first data flow link sends a message including a first control instruction, or when the tail service node receives a message used to generate the first control instruction, obtain a first message sent by the tail service node. The recording unit is configured to record a first moment at which the first message is obtained. The second obtaining unit is configured to obtain first delay information from the first message. The first delay information is used to determine a second moment at which a head service node on the first data flow link sends first data, and the first data is used to generate the first control instruction. The first determining unit is configured to determine a first end-to-end delay of the first data flow link based on the first moment and the second moment.

With reference to the third aspect, in some implementations of the third aspect, the head service node includes a first node and a second node. The first delay information is used to determine the second moment at which the first node sends the first data and a third moment at which the second node sends second data. The second data is used to generate the first control instruction. The first determining unit is configured to: determine a first delay of a first sub-link based on the first moment and the second moment, where the first sub-link includes the first node and the tail service node; determine a second delay of a second sub-link based on the first moment and the third moment, where the second sub-link includes the second node and the tail service node; and determine the first end-to-end delay based on the first delay and the second delay.

With reference to the third aspect, in some implementations of the third aspect, the head service node includes a third node and a fourth node. The first delay information is used to determine the second moment at which the third node sends the first data. The second obtaining unit is further configured to obtain second delay information based on the first delay information. The second delay information is used to determine a fourth moment at which the fourth node sends third data, and the third data is used to generate the first control instruction. The first determining unit is configured to: determine a third delay of a third sub-link based on the first moment and the second moment, where the third sub-link includes the third node and the tail service node; determine a fourth delay of a fourth sub-link based on the first moment and the fourth moment, where the fourth sub-link includes the fourth node and the tail service node; and determine the first end-to-end delay based on the third delay and the fourth delay.

With reference to the third aspect, in some implementations of the third aspect, the second delay information is generated when a first receiving port and/or a second receiving port of an intermediate service node receive/receives the message. The intermediate service node is a service node shared by the third sub-link and the fourth sub-link. The first receiving port is configured to receive a message transmitted on the third sub-link, and the second receiving port is configured to receive a message transmitted on the fourth sub-link.

With reference to the third aspect, in some implementations of the third aspect, the first determining unit is configured to: determine a first statistical indicator based on first user configuration information, and determine the first end-to-end delay based on the first statistical indicator. The first statistical indicator is associated with at least one of the following: an average delay of the first data flow link, a maximum response delay of the first data flow link, and a minimum response delay of the first data flow link.

With reference to the third aspect, in some implementations of the third aspect, the first data flow link further includes a first service node and a second service node. The apparatus further includes a processing unit, configured to: before the first obtaining unit obtains the first message sent by the tail service node on the first data flow link, write information about the second moment at which the head service node sends the first data into a second message sent by the first service node to the second service node.

With reference to the third aspect, in some implementations of the third aspect, the apparatus further includes a second determining unit. The first delay information is generated based on the first data flow link, and the second determining unit is configured to determine the first data flow link based on the head service node and the tail service node.

With reference to the third aspect, in some implementations of the third aspect, the apparatus further includes a third determining unit. The third determining unit is configured to: before the second determining unit determines the first data flow link, determine the head service node and/or the tail service node based on second user configuration information.

With reference to the third aspect, in some implementations of the third aspect, the apparatus includes a third obtaining unit and a fourth determining unit. The third obtaining unit is configured to: before the second determining unit determines the first data flow link, obtain information about a message channel of a third service node on the first data flow link. The fourth determining unit is configured to determine a dependency relationship of the third service node. The second determining unit is configured to determine the first data flow link based on the head service node, the tail service node, the information about the message channel of the third service node, and the dependency relationship of the third service node.

With reference to the third aspect, in some implementations of the third aspect, the apparatus is associated with an autonomous driving operating system.

With reference to the third aspect, in some implementations of the third aspect, the autonomous driving operating system is associated with at least one of the following: an automotive open system architecture communication management AUTOSAR CM module and a robot operating system ROS.

According to a fourth aspect, a delay determining apparatus is provided. The apparatus includes an obtaining unit, a recording unit, and a first determining unit. The obtaining unit is configured to: when a tail service node on a first data flow link sends a message including a first control instruction, or when the tail service node receives a message used to generate the first control instruction, obtain first delay information associated with the tail service node. The recording unit is configured to record a first moment at which the first delay information is obtained. The first delay information is used to determine a second moment at which a head service node on the first data flow link sends first data, and the first data is used to generate the first control instruction. The first determining unit is configured to determine a first end-to-end delay of the first data flow link based on the first moment and the second moment.

According to a fifth aspect, a delay determining apparatus is provided. The apparatus includes: a storage, configured to store a computer program; and a processor, configured to execute the computer program stored in the storage, for the apparatus to perform the method according to any one of the possible implementations of the first aspect or the second aspect.

According to a sixth aspect, a delay determining system is provided, including a link analysis apparatus and a delay determining apparatus.

The link analysis apparatus is configured to determine, based on information about a head service node and/or a tail service node, a first data flow link including the head service node and the tail service node.

The delay determining apparatus is configured to: when the tail service node sends a message including a first control instruction, or when the tail service node receives a message used to generate the first control instruction, obtain a first message sent by the tail service node, and record a first moment at which the first message is obtained; obtain first delay information from the first message, where the first delay information is used to determine a second moment at which the head service node sends first data, and the first data is used to generate the first control instruction; and determine a first end-to-end delay of the first data flow link based on the first moment and the second moment.

According to a seventh aspect, an intelligent driving device is provided. The intelligent driving device includes the apparatus according to any one of the possible implementations of the third aspect to the fifth aspect, or the system according to any one of the possible implementations of the sixth aspect.

With reference to the seventh aspect, in some implementations of the seventh aspect, the intelligent driving device is a vehicle.

According to an eighth aspect, a computer program product is provided. The computer program product includes computer program code. When the computer program code is run on a computer, the computer is enabled to perform the method according to any one of the possible implementations of the first aspect or the second aspect.

It should be noted that all or some of the computer program code may be stored in a first storage medium. The first storage medium may be encapsulated together with a processor, or may be encapsulated separately from a processor.

According to a ninth aspect, a computer-readable medium is provided. The computer-readable medium stores instructions. When the instructions are executed by a processor, the processor is enabled to implement the method according to any one of the possible implementations of the first aspect or the second aspect.

According to a tenth aspect, a chip is provided. The chip includes a circuit, and the circuit is configured to perform the method according to any one of the possible implementations of the first aspect or the second aspect.

### BRIEF DESCRIPTION OF DRAWINGS

FIG. 1 is a block diagram of an intelligent driving device according to an embodiment of this application;
FIG. 2 is a diagram of a system architecture required for implementing a delay determining method according to an embodiment of this application;
FIG. 3 is a diagram of a system architecture required for implementing a delay determining method according to an embodiment of this application;
FIG. 4(a) and FIG. 4(b) are a diagram of a system architecture required for implementing a delay determining method according to an embodiment of this application;
FIG. 5 is a schematic flowchart of a delay determining method according to an embodiment of this application;
FIG. 6 is a schematic flowchart of a delay determining method according to an embodiment of this application;
FIG. 7 is a diagram of a dependency relationship between service nodes according to an embodiment of this application;
FIG. 8 is a schematic flowchart of a delay determining method according to an embodiment of this application;
FIG. 9 is a diagram of a delay field in a message according to an embodiment of this application;
FIG. 10 is a schematic flowchart of a delay determining method according to an embodiment of this application;
FIG. 11 is a diagram of a time sequence of message sending and receiving by a service node according to an embodiment of this application;
FIG. 12 is a block diagram of a delay determining apparatus according to an embodiment of this application; and
FIG. 13 is a block diagram of a delay determining apparatus according to an embodiment of this application.

### DESCRIPTION OF EMBODIMENTS

In descriptions of embodiments of this application, unless otherwise specified, "/" indicates "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, an ordinal number, used to distinguish between the described objects does not constitute a limitation on the described objects. For descriptions of the described objects, refer to the descriptions of the context in the claims or embodiments. The use of such prefix words should not constitute a redundant limitation.

To facilitate understanding of the solutions in embodiments of this application, concepts in this application are first described.
1. Autonomous driving operating system (referred to as an autonomous driving system): The autonomous driving system is, for example, an operating system based on a portable operating system interface (portable operating system interface, POSIX) standard, is an operating system applicable to high-performance computing and high-bandwidth communication that are required by autonomous driving, and provides functions such as environment sensing, sensor fusion, and path planning of an intelligent driving device.
2. Autonomous driving service (referred to as a service): In the autonomous driving system, the service is usually a set of processes and/or threads that are encapsulated by using communication middleware and that have a specific autonomous driving function. The communication middleware may be a robot operating system (robot operating system, ROS), an automotive open system architecture communication management (automotive open system architecture communication management, AUTOSAR CM) module, or the like. The autonomous driving function may include functions such as environment sensing, sensor fusion, and path planning of the intelligent driving device.
3. Service node: The service node is an entity that provides a service. Two service nodes implement message passing or service invoking between processes or components by invoking an application programming interface (application programming interface, API) like a message sending interface or a message receiving interface of communication middleware. One service node may execute one or more tasks to implement a specific autonomous driving function.
4. Message passing: Message passing is a general term of a type of data communication methods performed between processes or software components in a computer system. During message passing, to-be-communicated data is abstracted and encapsulated into a "message", and two or more parties participating in communication implement message passing between the processes or the components by invoking primitives such as message sending and receiving primitives, to complete data communication.
5. Message channel (a topic): In this application, the message channel is a specified communication channel between service nodes. The message channel includes a sending port of a sender, a receiving port of a receiver, a channel name, a message format, and the like.
6. Data flow link: The data flow link is a link formed when data is transmitted between service nodes in a form of message.
7. Key data flow link: In all data flow links, the key data flow link is a link that affects one or more of a function, decision-making, control, and safety of autonomous driving, or may be a data flow link whose end-to-end delay is that a user wants to know.
8. Head service node: The head service node is a start point of the key data flow link, and may be, for example, a sensor.
9. Tail service node: The tail service node is an end point of the key data flow link, and may be, for example, a controller.
   In this application, one data flow link may have one or more head service nodes, or may have one or more tail service nodes.
10. End-to-end delay: In this application, the end-to-end delay refers to a duration from a moment at which a sensor sends collected data to a moment at which a controller sends a control instruction after the data is processed in tasks such as sensing, fusion, planning, and control on a data flow link. Alternatively, the end-to-end delay is a duration from a moment at which a sensor sends collected data to a moment at which a controller receives a message used to generate a control instruction. For example, the end-to-end delay may be a duration required for passing a message from the head service node on the data flow link to the tail service node on the data flow link. The end-to-end delay may include a communication delay between service nodes and a computing delay required by the service nodes to execute a task. A lower end-to-end delay indicates a higher control frequency of the autonomous driving system and higher sensitivity of the autonomous driving system. When an accident occurs, the intelligent driving device may quickly respond to ensure safety of the intelligent driving device.
11. Dependency relationship of a service node: The dependency relationship of a service node is a message receiving and/or message sending relationship between a current service node and another service node.
12. ROS: The ROS is an open-source meta-operating system applicable to a robot. The ROS provides inherent services of an operating system, including hardware abstraction, underlying device control, implementation of common functions, message passing between processes, and package management. The ROS also provides tools and library functions required for obtaining, compiling, and writing code and running the code across computers. The ROS is not a conventional operating system and cannot directly run on computer hardware, and therefore the ROS depends on another operating system like Linux or Windows. With continuous development of the ROS, a ROS 1 and a ROS 2 are evolved. The ROS 1 and the ROS 2 use different communication protocols and architectures. The ROS 1 uses a transmission control protocol (transmission control protocol, TCP) and a user datagram protocol (user datagram protocol, UDP), while the ROS 2 uses a data distribution service (DDS) protocol. In terms of a communication body, a minimum running unit of the ROS 1 is a node. In other words, nodes may communicate with each other, but communication between the nodes is controlled by a node manager (a master). If the node manager is faulty, the nodes cannot communicate with each other. A minimum running unit of the ROS 2 is an executable object. Each executable object may include several nodes, and the nodes find each other through a "self-discovery mechanism", to establish a stable communication connection without participation of a node manager.

The following describes technical solutions of embodiments of this application with reference to the accompanying drawings.

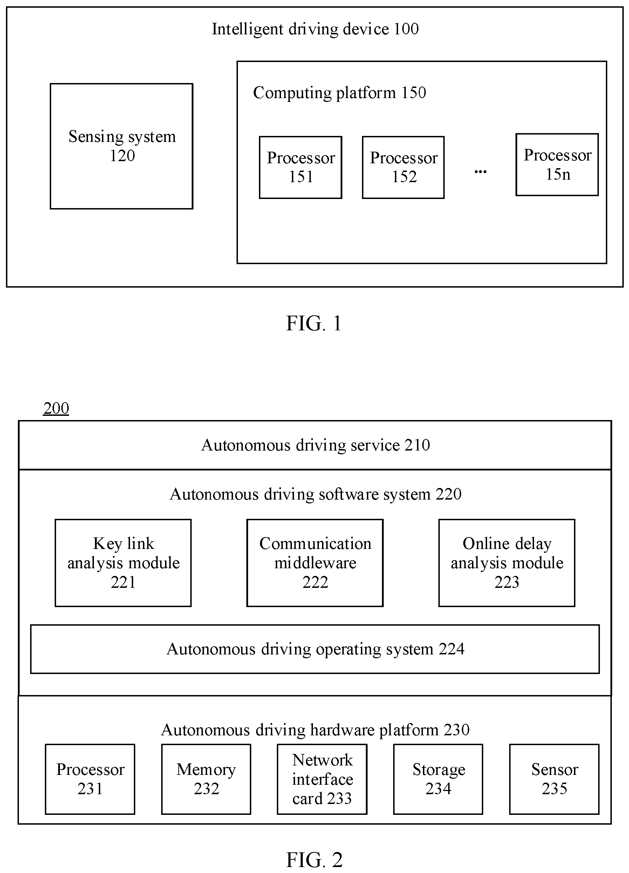

FIG. 1 is a functional block diagram of an intelligent driving device according to an embodiment of this application. As shown in FIG. 1, the intelligent driving device 100 may include a sensing system 120 and a computing platform 150. The sensing system 120 may include several sensors configured to sense information about an environment around the intelligent driving device 100. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and a camera apparatus.

Some or all functions of the intelligent driving device 100 may be controlled by the computing platform 150. The computing platform 150 may include processors 151 to 15n, and the processor is a circuit that has a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function via a logical relationship of a hardware circuit. The logical relationship of the hardware circuit is constant or may be reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a storage. The storage is configured to store instructions. Some or all of the processors 151 to 15n may invoke the instructions in the storage, to implement a corresponding function.

The computing platform 150 may include at least one of an autonomous driving domain controller (advanced driving domain controller, ADC) which may be referred to as a mobile data center (mobile data center, MDC), a vehicle domain controller (vehicle domain controller, VDC), and a chassis domain controller (chassis domain controller, CDC). Alternatively, the computing platform 150 may further include another computing platform, for example, an in-car application-server (in-car application-server, ICAS) controller, a body domain controller (body domain controller, BDC), a special equipment system (special equipment system, SAS), a media graphics unit (media graphics unit, MGU), a body super core (body super core, BSC), or an ADAS super core (ADAS super core). The ICAS may include at least one of the following: a vehicle control server ICAS 1, an intelligent driving server ICAS 2, an intelligent cockpit server ICAS 3, and an infotainment server ICAS 4.

For example, the computing platform 150 includes the ADC. Running of an advanced driver-assistance system (advanced driver-assistance system, ADAS) may be controlled by the computing platform 150. The ADAS obtains information from surroundings of the intelligent driving device by using a plurality of sensors (including but not limited to a lidar, a millimeter-wave radar, a camera apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and driver monitoring/reminder, thereby improving driving safety, automation, and comfort of the intelligent driving device.

In terms of logical functions, the ADAS generally includes three main functional modules: a sensing module, a decision-making module, and an execution module. The sensing module senses an ambient environment of the intelligent driving device by using a sensor, and inputs corresponding real-time data to the decision-making module. The sensing module mainly includes a vehicle-mounted camera/ultrasonic radar/millimeter-wave radar/lidar and the like. The decision-making module makes a corresponding decision by using a computing apparatus and an algorithm based on information obtained from the sensing module. After receiving a decision signal from the decision-making module, the execution module takes a corresponding action, for example, driving, changing a lane, steering, braking, or warning.

As described above, the duration from a moment at which the sensing module in the ADAS obtains the information about the ambient environment of the intelligent driving device to a moment at which the decision-making module transmits the decision signal to the execution module, namely, an end-to-end delay, may reflect a response speed of autonomous driving. A lower end-to-end delay indicates a higher control frequency of the autonomous driving system and higher sensitivity of the autonomous driving system. The autonomous driving system and service may also be optimized based on the end-to-end delay. For example, the service is adjusted based on the end-to-end delay.

Most conventional vehicle manufacturers and suppliers develop an assisted driving function based on an AUTOSAR classic platform (AUTOSAR classic platform, AUTOSAR CP). When the conventional vehicle manufacturers and suppliers transform to develop an autonomous driving service oriented to an AUTOSAR adaptive platform (AUTOSAR adaptive platform, AUTOSAR AP), the conventional vehicle manufacturers and suppliers lack a tool to measure an end-to-end delay of service. In a currently commonly used technology, a delay of a single service node is usually obtained by using a stub and inserting a probe in source code of the autonomous driving service, and delays of all service nodes are recorded and centralized, to obtain the end-to-end delay of the data flow link through online or offline calculation. However, the foregoing method is defected by the following: First, the source code of the service needs to be modified by performing operations such as using a stub and inserting a probe, and the stub is used at an entry point/exit point of a key function for testing, which may affect functional safety and a performance indicator of the service code. This is not expected by the vehicle manufacturers and the suppliers. Second, the stub used for testing and the inserted probe are highly coupled with the service, and therefore are not flexibly configurable. Consequently, modification and adjustment costs are high. In addition, in the commonly used technology, a user usually needs to provide information about a key data flow link. When the user is familiar with only code development and cannot provide the information about the key data flow link, it is difficult to calculate the end-to-end delay required by the user by using the current technology. In addition, the CM communication protocol stack and the DDS communication protocol stack are usually used in an AUTOSAR AP system of the vehicle manufacturers and the suppliers, while the ROS 1 or ROS 2 communication protocol stack is mostly used for autonomous driving service and algorithm development. In a current technical background, there is no compatible and convenient integrated delay statistical tool for the AUTOSAR CM and the ROS. As a result, when the autonomous driving system is integrated with the service, it may be difficult to determine the end-to-end delay in a unified and compatible manner.

In view of this, embodiments of this application provide a delay determining method and apparatus, and an intelligent driving device. When a user does not provide information about a key data flow link, the key data flow link may be determined based on information provided by the user about a head service node and a tail service node. Alternatively, when the user does not provide information about a head service node and a tail service node, the head service node and the tail service node may be first determined based on keyword matching, and then a key data flow link is determined based on the head service node and the tail service node. Further, based on the key data flow link, related information of a first moment at which the head service node sends first data is passed to the tail service node, and a second moment at which the tail service node sends a first message is obtained from the tail service node. The first message includes a first control instruction generated based on the first data. In this way, an end-to-end delay of the key data flow link including the head service node and the tail service node is determined based on the first moment and the second moment. In addition, according to the delay determining method provided in embodiments of this application, a statistical indicator may be determined based on user configuration information, and then the end-to-end delay desired by the user is obtained based on the statistical indicator through calculation. The user does not need to provide related information of the key data flow link, and does not need to understand a complex statistical calculation rule. For the user, this method is easy to use. In addition, according to the delay determining method provided in embodiments of this application, source code of an autonomous driving service does not need to be modified. This helps determine the end-to-end delay of the key data flow link on a premise that functional safety of the autonomous driving service is ensured.

FIG. 2 is a diagram of a system architecture required for implementing a delay determining method according to an embodiment of this application. The system architecture 200 may include an autonomous driving service 210, an autonomous driving software system 220, and an autonomous driving hardware platform 230.

The autonomous driving service 210 may include one or more services, and the one or more services are implemented by one or more service nodes. For example, the service node may be a sensor like a lidar or a camera, or the service node may be a controller like a CDC or a VDC.

The autonomous driving software system 220 includes a key link analysis module 221, communication middleware 222, an online delay analysis module 223, and an autonomous driving operating system 224.

The autonomous driving hardware platform 230 may provide a basic hardware platform for the autonomous driving software system 220, including a processor 231, a memory 232, a network interface card 233, a storage 234, and a sensor 235. The processor 231 provides a computing capability resource for the autonomous driving software system 220. The memory 232 provides a memory resource for the autonomous driving software system 220. The network interface card 233 provides a network communication resource for the autonomous driving software system 220. The storage 234 provides a general-purpose storage resource for the autonomous driving software system 220. The sensor 235 provides a sensing data resource for the autonomous driving software system 220.

The autonomous driving operating system 224 runs on the autonomous driving hardware platform 230, and may perform resource scheduling based on an actual requirement in an autonomous driving process or an actual requirement during running of the autonomous driving service 210. The autonomous driving service 210 obtains, through the autonomous driving operating system 224, computing capability, memory, communication, storage, and sensing resources required for running. The key link analysis module 221 is used to analyze a data flow link and a dependency relationship between service nodes, generate link route configuration information, and store the link route configuration information in the storage 234. The communication middleware 222 reads the link route configuration information from the storage 234, records delay information of the service node in a running process of the autonomous driving service 210, records the delay information in a first message, and sends the first message to another service node by using the communication middleware 222. The online delay analysis module 223 obtains the delay information of the service node from the communication middleware 222, and reads the link route configuration information in the storage 234. Further, the online delay analysis module 223 obtains an end-to-end delay through calculation based on the delay information and the link route configuration information. For example, the delay information may include a moment at which the service node receives a message and/or sends a message, and the delay information may be used to determine a moment at which a head service node on a key data flow link sends data.

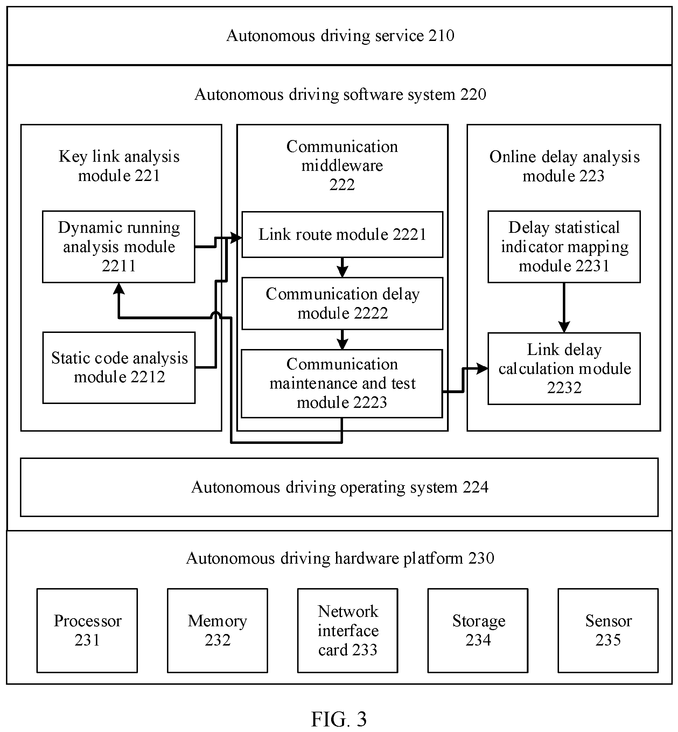

More specifically, as shown in FIG. 3, the key link analysis module 221 may include a dynamic running analysis module 2211 and a static code analysis module 2212. The dynamic running analysis module 2211 is used to determine the data flow link based on log information of a running process of the autonomous driving service. The static code analysis module 2212 is used to determine the data flow link based on source code of the autonomous driving service. The dynamic running analysis module 2211 and/or the static code analysis module 2212 may generate the link route configuration information based on information about the data flow link, and pass the link route configuration information to the communication middleware 222 through the storage 234. The log information of the running process of the autonomous driving service may include a message receiving and sending relationship between the service node and another service node. Therefore, the data flow link may be determined by using the log information.

The communication middleware 222 may include a link route module 2221, a communication delay module 2222, and a communication maintenance and test module 2223. After reading the link route configuration information from the storage 234, the link route module 2221 configures the service node on the key data flow link based on the link route configuration information. In this way, delay information in a message received or sent by the service node on the key data flow link may be passed to a next service node. In a running process of the service node, the communication delay module 2222 may record delay information of a service node into the memory 232. In addition, when the service node belongs to the key data flow link, the communication delay module 2222 may write delay information of the head service node on the key data flow link into a message to be sent by the service node, and pass the delay information to a next service node. The communication maintenance and test module 2223 may store all delay information in the memory into the storage 234, and may store the dependency relationship between service nodes into the storage 234.

The online delay analysis module 223 may include a delay statistical indicator mapping module 2231 and a link delay calculation module 2232. The delay statistical indicator mapping module 2231 is used to determine a statistical indicator based on user configuration information, and convert the statistical indicator into an end-to-end delay statistics and calculation method. After receiving delay information of a tail service node on the data flow link by using the communication middleware 222, the link delay calculation module 2232 calculates the end-to-end delay of the data flow link based on the delay statistics and calculation method determined by the delay statistical indicator mapping module 2231. For example, the statistical indicator may include at least one of the following: an average delay of the data flow link, a maximum response delay of the data flow link, and a minimum response delay of the data flow link.

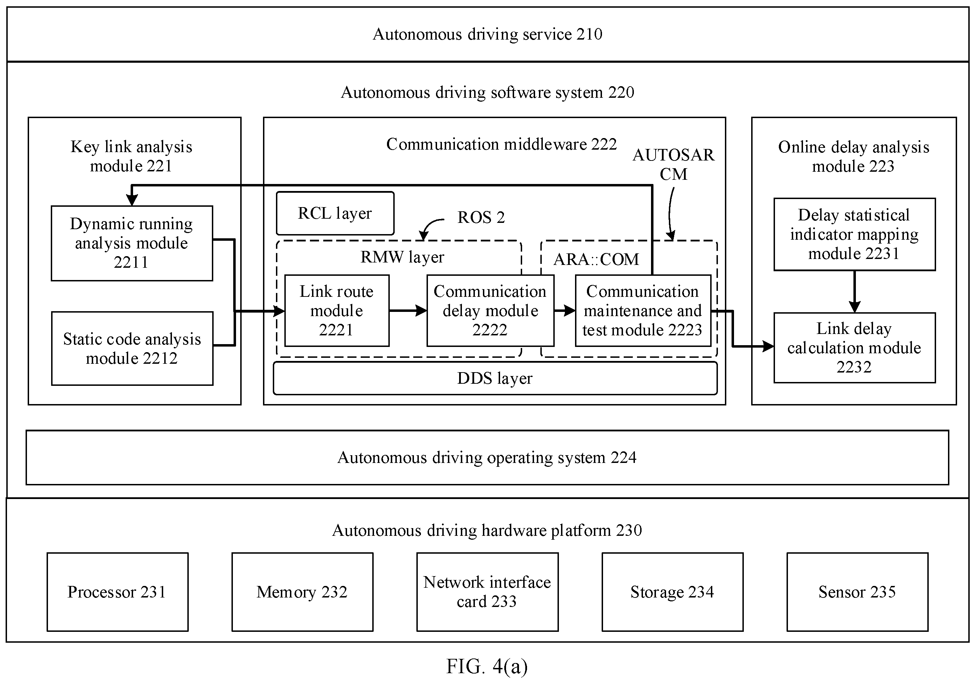

In some possible implementations, the communication middleware 222 in the system architecture 200 may implement delay information collection, recording, and passing functions of the service node in two communication protocol stacks AUTOSAR CM and ROS 2. As shown in FIG. 4(a), for the AUTOSAR CM protocol stack, this embodiment of this application mainly relates to an ARA::COM layer, which may include components such as Service Discovery, Method Handler, Events Handler, and Payload Serialization. For the ROS 2 protocol stack, this embodiment of this application relates to a ROS client library (RCL) layer, a ROS middleware (RMW) layer, and a DDS layer. The RMW layer includes components such as Topic, Service, Action, Type Support, Init and Serialization. In this embodiment of this application, the link route module 2221, the communication delay module 2222, and the communication maintenance and test module 2223 may be jointly added at the RMW layer and the ARA::COM layer of the communication middleware 222. The three modules are in the communication protocol stacks of CM and ROS 2 to implement unified end-to-end delay data collection, recording, and passing functions.

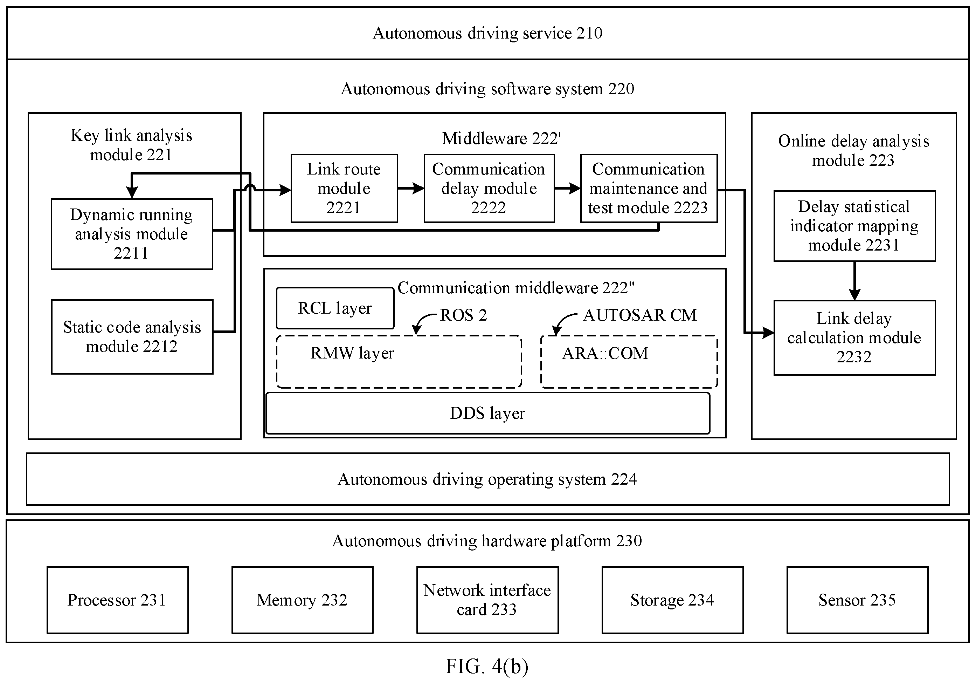

Alternatively, as shown in FIG. 4(b), the communication middleware 222 provided in this embodiment of this application may include middleware 222' and communication middleware 222". The middleware 222' may be encapsulated at an upper layer of the communication middleware 222", and the middleware 222' includes the link route module 2221, the communication delay module 2222, and the communication maintenance and test module 2223. The middleware 222' invokes an AUTOSAR CM/a ROS 2 interface in the communication middleware 222" and obtains the delay information. This can avoid using a probe in the communication middleware 222", so that the middleware 222' is compatible with another communication protocol stack in the communication middleware 222", for example, scalable service-oriented middleware over IP (scalable service-oriented middleware over Internet protocol, SOME/IP), FlexRay, message queue telemetry transport (message queue telemetry transport, MQTT), or a controller area network (controller area network, CAN).

It should be noted that the system architecture shown in FIG. 4(a) and FIG. 4(b) is used. In this way, the user can calculate the end-to-end delay of the autonomous driving service in the two communication protocol stacks: AUTOSAR CM/ROS 2 online, without modifying the source code of the autonomous driving service.

It should be noted that FIG. 4(a) and FIG. 4(b) are described by using the ROS 2 as an example. A person skilled in the art may design the communication middleware 222 based on an inventive concept of embodiments of this application, so that the communication middleware 222 shown in FIG. 4(a) and FIG. 4(b) can alternatively implement the delay information collection, recording, and passing functions of the service node in the two communication protocol stacks: AUTOSAR CM and ROS 1. In this way, the online delay analysis module 223 can calculate the end-to-end delay of the autonomous driving service in the two communication protocol stacks AUTOSAR CM/ROS 1 online.

For example, the intelligent driving device 100 shown in FIG. 1 may include the system architecture 200 shown in FIG. 2 to FIG. 4(b). Specifically, the sensing system 120 shown in FIG. 1 may include the sensor 235, and the computing platform 150 shown in FIG. 1 may include the autonomous driving service 210, the autonomous driving software system 220, and another component other than the sensor 235 in the autonomous driving hardware platform 230.

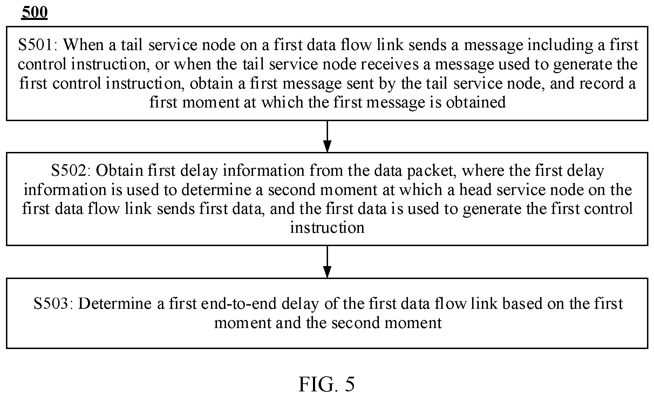

FIG. 5 is a schematic flowchart of a delay determining method 500 according to an embodiment of this application. The method 500 may be performed by the computing platform 150 shown in FIG. 1, or may be performed by the online delay analysis module 223 shown in FIG. 2, or may be performed by the link delay calculation module 2232 shown in FIG. 3 or FIG. 4(a) and FIG. 4(b). The method 500 may include S501 to S503.

S501: When a tail service node on a first data flow link sends a message including a first control instruction, or when the tail service node receives a message used to generate the first control instruction, obtain a first message sent by the tail service node, and record a first moment at which the first message is obtained.

For example, the first data flow link may include the key data flow link in the foregoing embodiments. The tail service node may include a controller that controls an execution mechanism, and the first control instruction may be a control instruction sent by the tail service node to the execution mechanism.

S502: Obtain delay information from the first message, where the delay information is used to determine a second moment at which a head service node on the first data flow link sends first data, and the first data is used to generate the first control instruction.

For example, the head service node may include one or more sensors in the foregoing embodiments, and the first data may be sensor data.

S503: Determine a first end-to-end delay of the first data flow link based on the first moment and the second moment.

According to the delay determining method provided in this embodiment of this application, the end-to-end delay of the data flow link may be determined based on the moment at which the tail service node obtains the first message and information included in the first message. The information included in the first message is passed from the head service node. Therefore, there is no need to use a stub or insert a probe into source code of an autonomous driving service, and there is no need to record and centralize delay information of all service nodes. This can determine the end-to-end delay of the data flow link with low overheads on a premise that functional safety of an autonomous driving system is ensured.

In some possible implementations, the first data flow link is determined based on information about the head service node and the tail service node. For example, the head service node and the tail service node may be determined by the key link analysis module 221 in the foregoing embodiments based on user configuration information, and the user configuration information is configuration information input by a user. Alternatively, the head service node and the tail service node may be determined by the key link analysis module 221 in the foregoing embodiments through keyword matching.

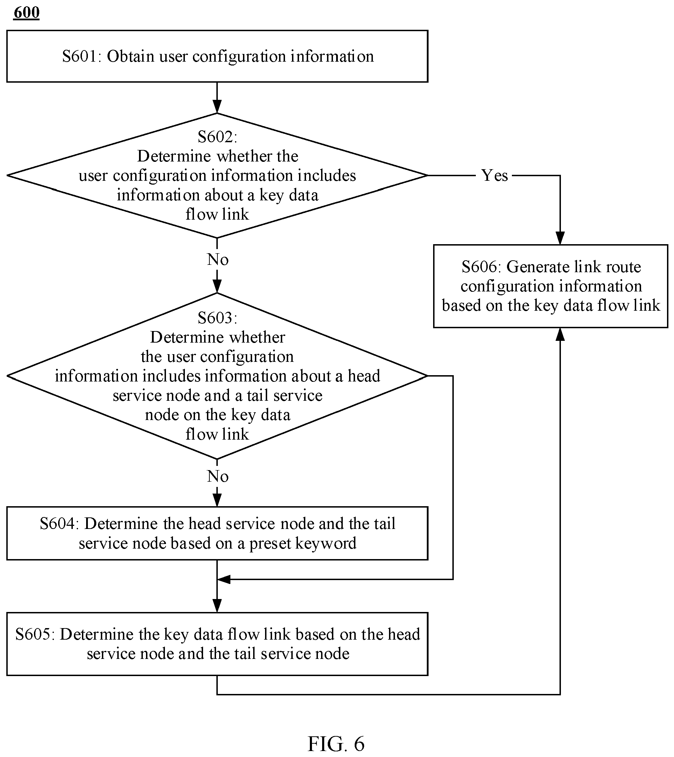

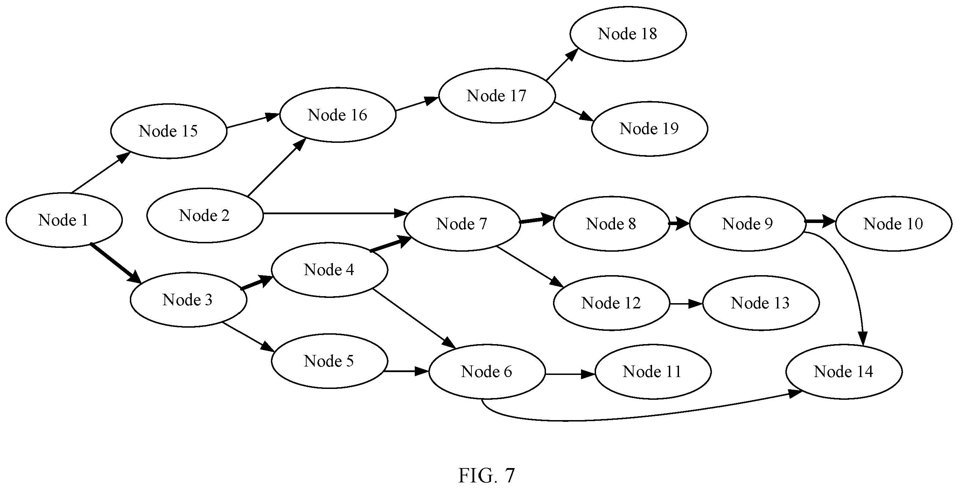

With reference to FIG. 6 and FIG. 7, the following uses an example to describe a method for determining the first data flow link by the key link analysis module 221. FIG. 6 shows a delay determining method 600. The method 600 may be performed before the method 500, and the method 600 may include S601 to S606.

S601: Obtain user configuration information.

For example, the user configuration information may include the configuration information input by the user in the foregoing embodiments.

In an example, the user configuration information may include information about a head service node and a tail service node on a key data flow link.

In another example, the user configuration information may include information about a key data flow link.

In still another example, the user configuration information may include a diagram of a dependency relationship between service nodes shown in FIG. 7 and information about a key data flow link.

S602: Determine whether the user configuration information includes the information about the key data flow link.

Specifically, when the user configuration information does not include the information about the key data flow link, S603 is performed; otherwise, S606 is performed.

For example, the first data flow link in the method 500 may include the key data flow link.

For example, the information about the key data flow link may include the dependency relationship between service nodes, or may be other information that may be used to directly or indirectly determine the key data flow link.

For example, a node 1 to a node 19 form the diagram of the dependency relationship shown in FIG. 7. A data flow link formed by the node 1, the node 3, the node 4, the node 7, the node 8, the node 9, and the node 10 is a key data flow link. In this case, information about the key data flow link may include a dependency relationship between every two of the node 1, the node 3, the node 4, the node 7, the node 8, the node 9, and the node 10.

In some possible implementations, the information about the key data flow link may include a description file in a format like JSON (JavaScript object notation), YAML (YAML ain't markup language), or Extensible Markup Language (extensible markup language, XML). JSON is used as an example. Information about a service node (for example, the node 1 in FIG. 7, namely, Lidar_Node) on the key data flow link may be in the following form:

```
     {
          "is_key_chain": "True",
          "nodename": "Lidar_Node",
          "pub ": [
             "/lidar_node"
          ],
          "sub ": [],
     }
```

Herein, "is_key_chain" is used to describe whether the service node belongs to the key data flow link; "True" indicates that the service node belongs to the key data flow link; "False" indicates that the service node does not belong to the key data flow link; "nodename" indicates a name of the service node; "pub" indicates a sending port of the service node for sending a message; for example, the sending port may include topic sending and service request in the ROS 2 protocol stack, and event sending, service request, and action request in the AUTOSAR CM protocol stack; "sub" indicates a receiving port of the service node for receiving a message; and for example, the receiving port may include topic receiving and service provisioning in the ROS 2 protocol stack, and event receiving, service provisioning, and action provisioning in the CM protocol stack.

Generally, if a pub list is empty and a sub list is not empty, it indicates that the service node is a tail service node and has no sending port. If the pub list is not empty and the sub list is empty, it indicates that the service node is a head service node. If both the pub list and the sub list are not empty, it indicates that the service node is an intermediate service node on the data flow link. If both the pub list and the sub list are empty, the service node is an isolated node, and does not exchange information with another service node.

S603: Determine whether the user configuration information includes the information about the head service node and the tail service node on the key data flow link.

Specifically, when the user configuration information does not include the information about the head service node and the tail service node on the key data flow link, S604 is performed; otherwise, S605 is performed.

For example, the information about the head service node and the tail service node on the key data flow link may include information used to determine the head service node and the tail service node on the key data flow link, for example, a name of each of the head service node and the tail service node, or a unique identifier (identifier, ID) of each of the head service node and the tail service node.

S604. Determine the head service node and the tail service node based on a preset keyword.

For example, the preset keyword may include keywords used to determine the head service node and the tail service node. The keywords used to determine the head service node may include "lidar", "camera", "radar", "uss", "gps", "imu", "source", "sensor", "init", and the like. The keywords used to determine the tail service node may include "control", "controlling", "controller", "ctrl", and the like.

In some possible implementations, after a preset head service node and a preset tail service node are preliminarily selected based on the preset keyword, information about the preset head service node and the preset tail service node is output for a user to confirm. After the user performs confirmation, the preset head service node and the preset tail service node are considered as the head service node and the tail service node. If the user does not feed back information, in other words, the user does not perform confirmation, a preset head service node and a preset tail service node that best match the preset keyword are determined as the head service node and the tail service node.

S605: Determine the key data flow link based on the head service node and the tail service node.

In an example, in a running process of the service node, the key link analysis module 221 may obtain information about each service node. The information includes but is not limited to a name, a message channel, a message format, a message receiving/sending frequency, a message data volume bandwidth, and the like of the service node. Further, the key link analysis module 221 converts, based on the foregoing information, an issue of calculating the key data flow link into an issue of a classical graph theory. Each service node is a point in a graph, each message channel is a connection line, information such as the message sending/receiving frequency and the data volume bandwidth is a weight, and the head service node and tail service node are a start point and an end point in the graph. Further, the key data flow link including the head service node and the tail service node is determined according to a classical graph theory algorithm. For example, the classical graph theory algorithm may include an algorithm like a minimum/maximum spanning tree, topology sorting, a minimum/maximum network flow, and a shortest path.

In another example, in a running process of the service node, the key link analysis module 221 may obtain information about each service node. The information includes but is not limited to a name (an ID), a message channel, a message format, a message receiving/sending frequency, a message data volume bandwidth, and the like of the service node. Further, the key link analysis module 221 determines, according to a data mining algorithm, the key data flow link including the head service node and the tail service node. For example, the data mining algorithm may include an algorithm like an association relationship analysis method, a Bayesian network, and a Markov chain.

In another example, when the service node is not in a running process, the key link analysis module 221 (for example, the static code analysis module 2212) may perform data coloring analysis on source code of the autonomous driving service, to determine the key data flow link. A specific procedure is as follows.
(a) First, information about the message channel of the service node is determined by analyzing invoking of a service node initialization API, a service configuration API, a message communication API, and the like in static code. The information about the message channel may include a name (or an ID) of the service node, a message channel name, and an action (sending or receiving). Optionally, the information about the message channel of the service node may be determined by using a startup configuration file of the service node.
(b) Then, an abstract syntax tree is constructed for source code of each service node, and a dependency relationship of each service node is analyzed based on the message channel of the service node, including but not limited to methods such as control flow analysis and data flow analysis. For a service node, one sending port may depend on one receiving port, or one sending port may depend on a plurality of receiving ports. Alternatively, a sending port may not depend on any receiving port, and this case usually occurs on the head service node.
(c) The key data flow link including the head service node and the tail service node is determined according to the classical graph theory algorithm based on the information, determined in (a), about the message channel of the service node and the dependency relationship, determined in (b), of the service node and with reference to the information about the head service node and the information about the tail service node.

S606: Generate link route configuration information based on the key data flow link.

According to the delay determining method provided in this embodiment of this application, the key data flow link may be determined based on the information provided by the user about the head/tail service node. When the user cannot provide the information about the head/tail service node, the key data flow link may alternatively be determined through keyword matching, to generate the link route configuration information. In this way, when the user is familiar with only code development and cannot provide the information about the key data flow link, an end-to-end delay of the key data flow link can still be determined according to the foregoing method. This helps reduce learning costs in a process in which the user determines the end-to-end delay.

In some possible implementations, in a running process of service nodes, the communication middleware 222 shown in any one of FIG. 2 to FIG. 4(b) may control, based on the link route configuration information, transmission of the delay information between the service nodes.

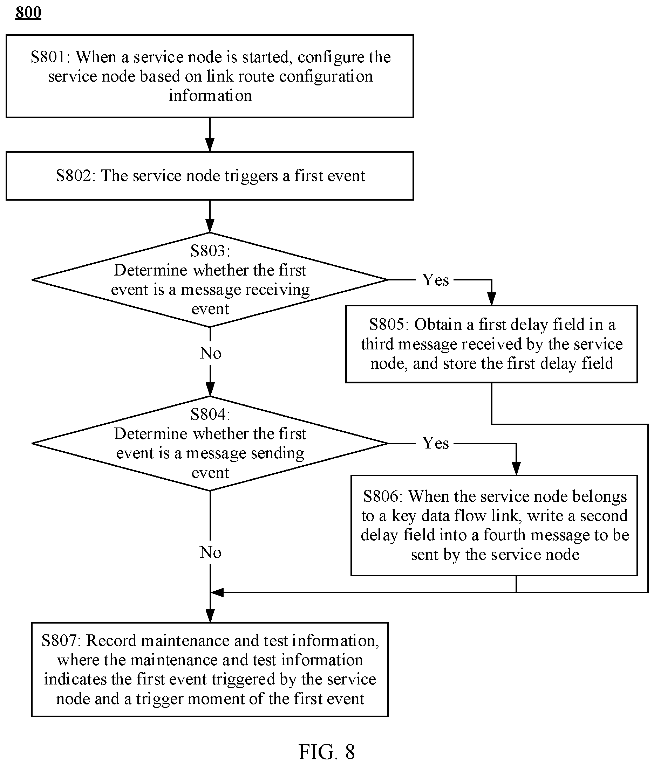

For example, FIG. 8 shows a method 800 for controlling delay information passing by the communication middleware 222. The method 800 may be performed after the method 600 and before the method 500, or the method 800 and the method 500 may be performed in parallel. The method 800 may include S801 to S807.

S801: When a service node is started, configure the service node based on link route configuration information.

For example, the service node is configured based on the link route configuration information, so that delay information in a message received and sent by the service node on a key data flow link can be passed to a next service node.

S802: The service node triggers a first event.

For example, the first event may include a message receiving event, a message sending event, and a callback event.

In some possible implementations, after the service node triggers the first event, the service node performs, by using the communication middleware, an operation corresponding to the first event. For example, the first event is a message receiving event, and the service node receives a message by using the communication middleware. Alternatively, the first event is a message sending event, and the service node sends a message by using the communication middleware.

S803: Determine whether the first event is a message receiving event.

Specifically, if the first event is not a message receiving event, S804 is performed; otherwise, S805 is performed.

S804: Determine whether the first event is a message sending event.

Specifically, if the first event is a message sending event, S806 is performed; otherwise, S807 is performed.

S805: Obtain a first delay field in a third message received by the service node, and store the first delay field.

In some possible implementations, the first delay field is obtained by using a hook function, and the first delay field is stored in a memory.

For example, the delay information may include the first delay field.

For example, the communication middleware of the service node enters the hook function of a communication delay module in processing of the message receiving event, and parses the first delay field in the third message. The first delay field may include but is not limited to a name (or an ID) of a service node that sends the third message, a sequence number of the third message, a timestamp obtained when the third message is sent, and a name of a sending port used to send the third message.

S806: When the service node belongs to the key data flow link, write a second delay field into a fourth message to be sent by the service node.

For example, specific content of the second delay field may be latest delay information obtained from the memory.

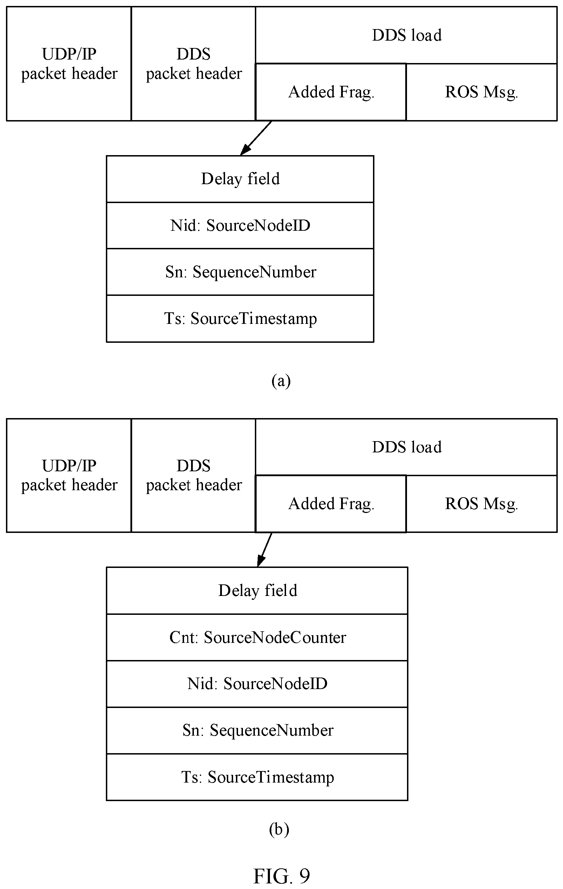

For example, the second delay field may be added to a DDS load of the fourth message, or a new DDS quality of service profile (quality of service profile, QoS Profile) may be added. The following uses an example in which the fourth message is a ROS 2 message to describe a manner of adding a delay field to the DDS load. Herein, (a) in FIG. 9 shows a format of the ROS 2 message. In this embodiment of this application, the delay field is added to an "Added Frag." field of the DDS load. The delay field includes an Nid, an Sn, and a Ts, which respectively indicate an ID of a head service node (or may be a name of the head service node), a sequence number of a data packet of the head service node, and a timestamp of the head service node. It may be understood that the data packet of the head service node includes sensor data, and the fourth message is generated based on the sensor data or includes the sensor data. For example, each time the head service node sends a data packet, the Sn is increased by 1. For example, if an Sn of a first data packet sent by the head service node is 1502870000, an Sn of a second data packet sent by the head service node is 1502870001, and so on.

For example, when the service node does not belong to the key data flow link, the Nid, the Sn, and the Ts in the delay field are set to 0 and passed on.

In some possible implementations, the key data flow link has only one source, that is, includes only one head service node. FIG. 7 is used as an example. If a link on which the node 1, the node 3, the node 5, the node 6, and the node 11 are located is a key data flow link, the link has only one source, namely, the node 1.

In some possible implementations, the key data flow link has a plurality of sources, that is, includes a plurality of head service nodes. For example, the key data flow link includes two head service nodes. For example, as shown in FIG. 7, a link on which the node 1, the node 2, the node 3, the node 4, the node 7, the node 8, the node 9, and the node 10 are located is a key data flow link. In this case, the link has two sources, namely, the node 1 and the node 2. Two branches formed from the two sources, namely, a branch of the node 2 and the node 7 and a branch of the node 1, the node 3, the node 4, and the node 7, intersect at the node 7 and merge into one link. It may be understood that the node 7 has at least two receiving ports and one sending port.

For example, the second delay field is written, based on a location of the service node on the key data flow link, into the fourth message to be sent by the service node.

In an example, if the service node is a head service node, the second delay field may include an ID of the head service node, an Sn obtained when the fourth message is sent, and a timestamp obtained when the fourth message is sent.

In another example, the service node is any node other than a multi-link merge node (for example, the node 7) on the key data flow link. In other words, for the key data flow link, the service node has only one receiving port, configured to receive a message of a previous service node on the key data flow link. In this case, specific content of the second delay field is determined based on an Nid, an Sn, and a Ts of a delay field in a received message. To be specific, the recorded delay field in the message received by the receiving port is selected and copied from the memory, and is filled in the second delay field of the fourth message. If there are a plurality of pieces of delay information in the memory, latest delay information, namely, a maximum Sn and/or latest Ts, in the memory may be selected. In addition, if the Nid, the Sn, and the Ts in delay information are all 0, the information is ignored.

In still another example, when the service node is a multi-link merge node (for example, the node 7), because the service node has a plurality of receiving ports, Nid fields in delay data obtained based on received messages may be different. In this case, a plurality of pieces of latest delay information received by the service node in the memory are combined and deduplicated to form a new delay data packet. The new delay data packet is sent to a specific delay message channel by using the communication middleware. Further, one Nid is randomly selected from delay information in the messages received by the plurality of receiving ports, and latest delay information corresponding to the Nid is filled in the second delay field in the to-be-sent fourth message and passed to the next service node. For example, the multi-link merge node is the node 7. In this case, the new delay data packet may include delay information of the node 1 and the node 2, namely, [Nid₁, Sn₁, Ts₁] and [Nid₂, Sn₂, Ts₂]. If the randomly selected Nid is an Nid of the node 1, delay information written into the second delay field is [Nid₁, Sn₁, Ts₁]. Further, delay information carried in a message received by a tail service node (the node 10) on the key data flow link is [Nidi, Sn₁, Ts₁].

Optionally, the specific delay message channel may be a memory or a storage shared by all service nodes.

Optionally, delay fields of all messages are variable-length delay fields. For example, a format of the delay field is shown in (b) in FIG. 9. Herein, a Cnt indicates a quantity of receiving ports of the multi-link merge node (or a quantity of Nids in the delay information), followed by pieces of delay information of the same quantity (for example, a triplet [Nid, Sn, Ts]). The communication middleware deduplicates the delay fields in the messages received by the plurality of receiving ports in the memory, then writes all deduplicated delay fields into the second delay field of the to-be-sent fourth message, and passes the to-be-sent fourth message to the next service node. For example, the multi-link merge node is the node 7. In this case, the Cnt field in the second delay field is 2, and the field is followed by delay information of the node 1 and the node 2, namely, [Nidi, Sn₁, Ts₁] and [Nid₂, Sn₂, Ts₂].

In yet another example, the service node is a tail service node (for example, the node 10). When a receiving port of the tail service node receives a message sent by a previous service node, delay information in the message is added to a delay field of an additional delay message, and then the message is sent to a specific delay message channel. Optionally, the specific delay message channel may be a memory or a storage shared by all service nodes, or may be another channel used to store a delay message.

For example, the "first message" in the method 500 may include the additional delay message.

In some possible implementations, a specific strategy of writing the second delay field into the fourth message to be sent by the service node may be preset.

S807: Record maintenance and test information, where the maintenance and test information indicates the first event triggered by the service node and a trigger moment of the first event.

For example, the maintenance and test information may include but is not limited to a name of the service node (or an ID of the service node), event-related information, an occurrence moment of the event, and the like. The event-related information may include an event type (for example, message sending/receiving, callback, or timer triggering).

For example, the maintenance and test information may be used by the key link analysis module 221 to determine the data flow link.

According to the delay determining method provided in this embodiment of this application, the delay information of the head service node may be passed on the key data flow link by using the communication middleware, so that the tail service node can obtain the delay information of the head service node, and send the delay information of the head service node to the specific delay channel. In this way, an online delay analysis module obtains an end-to-end delay of the key data flow link through calculation.

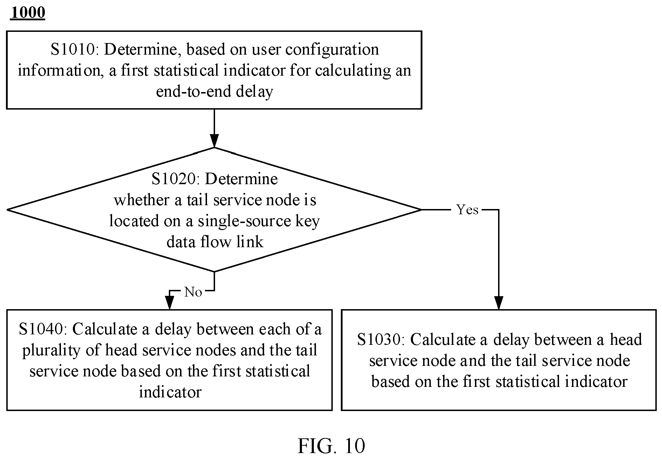

FIG. 10 is a schematic flowchart of a delay determining method 1000 according to an embodiment of this application. The method may be performed by an online delay analysis module 223. The method 1000 may be performed after the method 800. The method 1000 may be performed with the method 500 concurrently. The method 1000 may be considered as an extension of S503 in the method 500. The method 1000 may include S1010 to S1040.

S1010: Determine, based on user configuration information, a first statistical indicator for calculating an end-to-end delay.

In some possible implementations, the user configuration information in this step and the user configuration information in S601 are configuration information input by a user at a same moment, or may be configuration information separately input by a user.

In some possible implementations, the first statistical indicator is determined based on the user configuration information, and a first end-to-end delay of a first data flow link is calculated based on the first statistical indicator. The first statistical indicator is associated with at least one of the following: an average delay of the first data flow link, a maximum response delay of the first data flow link, and a minimum response delay of the first data flow link.

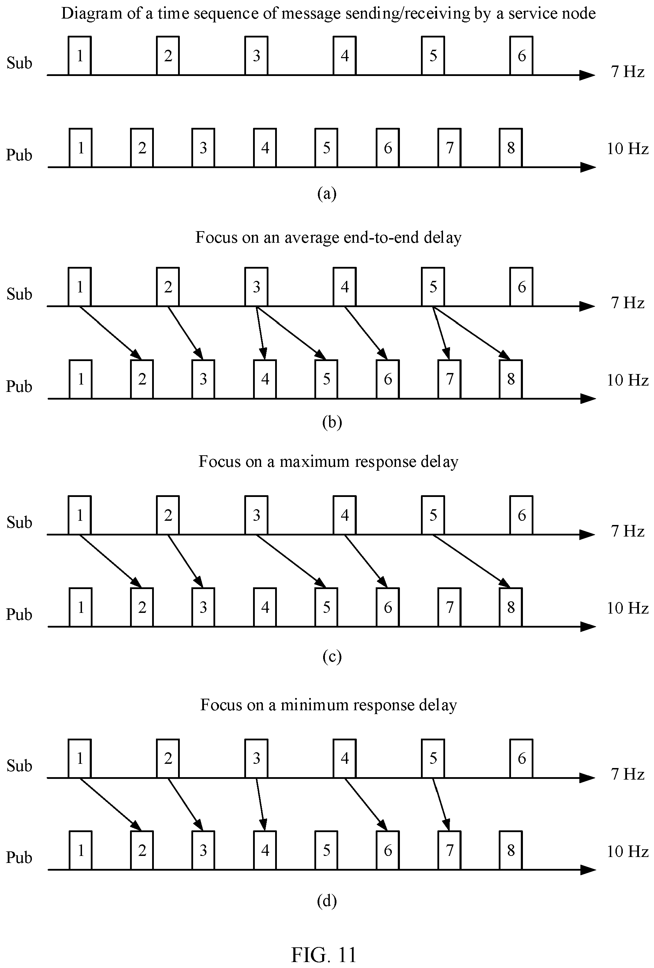

For example, the first data flow link is a key data flow link. In this case, an end-to-end delay of the key data flow link is calculated based on the first statistical indicator. The following describes impact of different statistical indicators on an end-to-end delay result with reference to FIG. 11.

For example, a message channel of a service node is a single-receive and single-transmit message channel, that is, has one receiving port and one sending port. A frequency of receiving a message is 7 Hz, and a frequency of sending a message is 10 Hz, as shown in (a) in FIG. 11. After receiving a message at a moment Sub 1, the service node may send the message at a moment Pub 2. After receiving a message at a moment Sub 2, the service node may send the message at a moment Pub 3. After receiving a message at a moment Sub 3, the service node may send the message at a moment Pub 4 and/or a moment Pub 5. After receiving a message at a moment Sub 4, the service node may send the message at a moment Pub 6. After receiving a message at a moment Sub 5, the service node may send the message at a moment Pub 7 and/or a moment Pub 8.

In an example, when the first statistical indicator is associated with the average delay of the key data flow link, delay data of all tail service nodes of a same Sn is counted, and then all end-to-end delay data is calculated in combination with delay data of a head service node, to obtain an average value of all end-to-end delays. For each service node, each of possible durations from a moment of receiving the message by the service node to a moment of sending the message by the service node is considered. For example, as shown in (b) in FIG. 11, a current service node receives a message at a moment Sub 3 and sends the message at both a moment Pub 4 and a moment Pub 5. A next service node may also receive the message at the moment Sub 3 and sends the message at both the moment Pub 4 and the moment Pub 5. This is also applicable to the rest service nodes. After permutation and combination, there may be a plurality of pieces of duration data of a message sent from the head service node to the tail service nodes on the key data flow link. In this case, an average value of the plurality of pieces of duration data is obtained through calculation and considered as an average delay of the key data flow link.

In another example, when the first statistical indicator is associated with the maximum response delay of the key data flow link, maximum data is taken from delay data of all tail service nodes of a same Sn, and the end-to-end delay is calculated in combination with delay data of a head service node. For each service node, a longest duration required by the service node from a moment of receiving a message to a moment of sending the message is considered. For example, as shown in (c) in FIG. 11, a current service node receives a message at a moment Sub 3, and a duration to a moment at which the current service node sends the message at a moment Pub 5 is considered. A next service node may also receive the message at a moment Sub 2 and sent the message at the moment Pub 3. Alternatively, the next service node may receive the message at the moment Sub 3. In this case, a duration to a moment at which the next service node sends the message at the moment Pub 5 is considered. This is applicable to the rest service nodes. A longest duration required for transmitting a message from the head service node to the tail service nodes on the key data flow link is the maximum response delay of the key data flow link.

In still another example, when the first statistical indicator is associated with the minimum response delay of the key data flow link, maximum data is taken from delay data of all tail service nodes of a same Sn, and the end-to-end delay is calculated in combination with delay data of a head service node. For each service node, a longest duration required by the service node from a moment of receiving a message to a moment of sending the message is considered. For example, as shown in (d) in FIG. 11, a current service node receives a message at a moment Sub 3, and a duration to a moment at which the current service node sends the message at a moment Pub 4 is considered. A next service node may also receive the message at a moment Sub 2 and sent the message at the moment Pub 3. Alternatively, the next service node may receive the message at the moment Sub 3. In this case, a duration to a moment at which the next service node sends the message at the moment Pub 4 is considered. This is applicable to the rest service nodes. A shortest duration required for transmitting a message from the head service node to the tail service nodes on the key data flow link is the minimum response delay of the key data flow link.

It should be noted that the delay data of the tail service node includes a moment at which a first message (for example, an additional delay message) sent by the tail service node is obtained, and the message may include a Ts of the head service node. The delay data of the head service node includes the Ts of the head service node.

S1020: Determine whether the tail service node is located on a single-source key data flow link.

Specifically, if the tail service node is located on a single-source key data flow link, S1030 is performed; otherwise, S1040 is performed.

It may be understood that the single-source key data flow link is a data flow link including one head service node, and a multi-source key data flow link is a data flow link including two or more head service nodes.

S1030: Calculate a delay between the head service node and the tail service node based on the first statistical indicator.

For example, a first moment, for example, a moment Tₑ, at which the tail service node sends the first message is obtained, and then a second moment, for example, a moment Tsₛ, determined based on the first message is subtracted, to obtain the delay between the head service node and the tail service node, that is, d=Tₑ-Tsₛ.

Further, the end-to-end delay of the key data flow link is determined based on the first statistical indicator and one or more pieces of delay data between the head service node and the tail service node.

S1040: Calculate a delay between each of a plurality of head service nodes and the tail service node in a first mode.

For example, if the first message includes a variable-length delay field, that is, includes a Cnt field and triplets [Nid, Sn, Ts] of a quantity corresponding to the field, a first moment, for example, the moment Tₑ, at which the first message sent by the tail service node is obtained is used, and then each of a plurality of moments, for example, a moment T_{Si}, determined based on the first message is subtracted, where i=0, 1, ..., N-1, and N is the quantity of triplets [Nid, Sn, Ts] (namely, a quantity of head service nodes). In this case, the delay between each head service node and the tail service node is d=Tₑ-T_{Si}.

For example, the plurality of head service nodes include a first node and a second node. The first message includes first delay information. The first delay information is used to determine a second moment at which the first node sends first data and a third moment at which the second node sends second data. The first data and the second data are used to generate a first control instruction.

For example, if the first message uses the variable-length delay field, that is, includes the Cnt field, the first message includes a triplet [Nidi, Sn₁, Tₛ₁] corresponding to the first node and a triplet [Nid₂, Sn₂, Tₛ₂] corresponding to the second node, the online delay analysis module 223 may determine, based on the triplet [Nidi, Sn₁, Tₛ₁], the second moment Tₛ₁ at which the first node sends a message (including the first data) whose sequence number is Sₙ₁, and determine, based on the triplet [Nid₂, Sₙ₂, Tₛ₂], the third moment Tₛ₂ at which the second node sends a message (including the second data) whose sequence number is Sₙ₂. It may be understood that the triplet [Nid₁, Sₙ₁, Tₛ₁] and the triplet [Nid₂, Sₙ₂, Tₛ₂] that are included in the first message may be a form of the first delay information.

Further, the online delay analysis module 223 determines a first delay of a first sub-link based on the first moment and the second moment, where the first sub-link includes the first node and the tail service node; determines a second delay of a second sub-link based on the first moment and the third moment, where the second sub-link includes the second node and the tail service node; and determines the end-to-end delay of the key data flow link based on the first delay and the second delay. For example, the end-to-end delay of the key data flow link may include the first delay and the second delay.

For example, the plurality of head service nodes include a third node and a fourth node. The first message includes first delay information. The first delay information is used to determine a second moment at which the third node sends first data. In this case, the method may further include: obtaining second delay information based on the first delay information, where the second delay information is used to determine a fourth moment at which the fourth node sends third data, and the first data and the third data are used to generate a first control instruction.

For example, if the first message does not use the variable-length delay field, that is, does not include the Cnt field but includes a triplet [Nid₃, Sₙ₃, Tₛ₃] corresponding to the third node, the online delay analysis module 223 may determine, based on the triplet [Nid₃, Sₙ₃, Tₛ₃], the second moment Tₛ₃ at which the third node sends a message (including the first data) whose sequence number is Sₙ₃. It may be understood that the triplet [Nid₃, Sₙ₃, Tₛ₃] may be a form of the first delay information. According to the description of S806 in the method 800, when the key data flow link has a plurality of sources, and the delay field is not a variable-length delay field, after the multi-link merge node receives the message, the communication middleware generates a new delay data packet and sends the new delay data packet to a specific delay channel. The new delay data packet includes the triplets [Nid, Sₙ, Tₛ] of the plurality of sources (or referred to as head service nodes). For example, the key data flow link includes the third node and the fourth node. The new delay data packet generated by the communication middleware includes the triplet [Nid₃, Sₙ₃, Tₛ₃] of the third node and a triplet [Nid₄, Sn₄, Ts₄] of the fourth node.

Further, the online delay analysis module 223 may find the new delay data packet based on the triplet [Nid₃, Sₙ₃, Tₛ₃]. For example, the new delay data packet may be a form of the second delay information. Further, the online delay analysis module 223 determines the triplet [Nid₄, Sn₄, Ts₄] based on the second delay information, and further determines the fourth moment Ts₄ at which the fourth node sends the third data. Further, the online delay analysis module 223 determines a third delay between the third node and the tail service node based on the first moment and the second moment, and determines a fourth delay between the fourth node and the tail service node based on the first moment and the fourth moment. Further, the end-to-end delay of the key data flow link is determined based on the third delay and the fourth delay. For example, the end-to-end delay of the key data flow link may include the third delay and the fourth delay.

Optionally, the end-to-end delay of the key data flow link may be determined based on the first statistical indicator and one or more pieces of delay data between each of the plurality of head service nodes and the tail service node.

In the delay determining method provided in this embodiment of this application, the statistical indicator may be mapped to a predefined end-to-end delay determining method based on the configuration information input by the user, to calculate the end-to-end delay that the user pays attention to. A user-friendly and easy-to-use statistical indicator is used to describe the end-to-end delay that the user pays attention to. This helps improve user experience. In addition, in the delay determining method provided in this embodiment of this application, an end-to-end delay of each link in the multi-source data low link can also be obtained through calculation.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

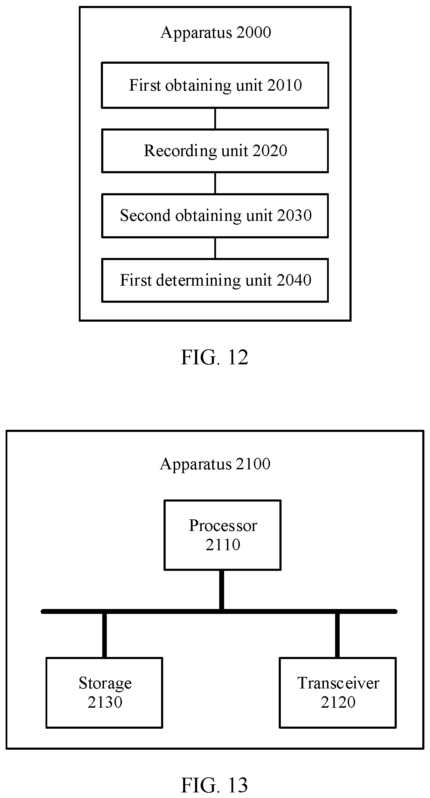

The foregoing describes in detail the methods provided in embodiments of this application with reference to FIG. 1 to FIG. 11. The following describes in detail apparatuses provided in embodiments of this application with reference to FIG. 12 and FIG. 13. It should be understood that descriptions of the apparatus embodiments correspond to descriptions of the method embodiments. Therefore, for content that is not described in detail, refer to the method embodiments. For brevity, details are not described herein again.

FIG. 12 is a block diagram of a delay determining apparatus 2000 according to an embodiment of this application. The apparatus 2000 includes a first obtaining unit 2010, a recording unit 2020, a second obtaining unit 2030, and a first determining unit 2040.

The apparatus 2000 may include units configured to perform the methods in FIG. 5, FIG. 6, FIG. 8, and FIG. 10. In addition, the units in the apparatus 2000 are separately used to implement corresponding procedures of the method embodiments in FIG. 5, FIG. 6, FIG. 8, and FIG. 10.

When the apparatus 2000 is configured to perform the method 500 in FIG. 5, the first processing unit 2010 and the recording unit 2020 may be configured to perform S501 in the method 500, the second obtaining unit 2030 may be configured to perform S502 in the method 500, and the first determining unit 2040 may be configured to perform S503 in the method 500.

Specifically, the first obtaining unit 2010 is configured to: when a tail service node on a first data flow link sends a message including a first control instruction, or when the tail service node receives a message used to generate the first control instruction, obtain a first message sent by the tail service node. The recording unit 2020 is configured to record a first moment at which the first message is obtained. The second obtaining unit 2030 is configured to obtain first delay information from the first message. The first delay information is used to determine a second moment at which a head service node on the first data flow link sends first data, and the first data is used to generate the first control instruction. The first determining unit 2040 is configured to determine a first end-to-end delay of the first data flow link based on the first moment and the second moment.

In some possible implementations, the first obtaining unit 2010 and the third obtaining unit 2030 are a same obtaining unit.

Optionally, the head service node includes a first node and a second node. The first delay information is used to determine the second moment at which the first node sends the first data and a third moment at which the second node sends second data. The second data is used to generate the first control instruction. The first determining unit 2040 is configured to: determine a first delay of a first sub-link based on the first moment and the second moment, where the first sub-link includes the first node and the tail service node; determine a second delay of a second sub-link based on the first moment and the third moment, where the second sub-link includes the second node and the tail service node; and determine the first end-to-end delay based on the first delay and the second delay.

Optionally, the head service node includes a third node and a fourth node. The first delay information is used to determine the second moment at which the third node sends the first data. The second obtaining unit 2030 is further configured to obtain second delay information based on the first delay information, where the second delay information is used to determine a fourth moment at which the fourth node sends third data, and the third data is used to generate the first control instruction. The first determining unit 2040 is configured to: determine a third delay of a third sub-link based on the first moment and the second moment, where the third sub-link includes the third node and the tail service node; determine a fourth delay of a fourth sub-link based on the first moment and the fourth moment, where the fourth sub-link includes the fourth node and the tail service node; and determine the first end-to-end delay based on the third delay and the fourth delay.

Optionally, the second delay information is generated when a first receiving port and/or a second receiving port of an intermediate service node receive/receives the message. The intermediate service node is a service node shared by the third sub-link and the fourth sub-link. The first receiving port is configured to receive a message transmitted on the third sub-link, and the second receiving port is configured to receive a message transmitted on the fourth sub-link.

Optionally, the first determining unit 2040 is configured to: determine a first statistical indicator based on first user configuration information; and determine the first end-to-end delay based on the first statistical indicator. The first statistical indicator is associated with at least one of the following: an average delay of the first data flow link, a maximum response delay of the first data flow link, and a minimum response delay of the first data flow link.

For example, the first user configuration information may include the user configuration information in the method 1000.

Optionally, the first data flow link further includes a first service node and a second service node. The apparatus 2000 further includes a processing unit, configured to: before the first obtaining unit 2010 obtains the first message sent by the tail service node on the first data flow link, write information about the second moment at which the head service node sends the first data into a second message sent by the first service node to the second service node.

Optionally, the apparatus 2000 further includes a second determining unit. The first delay information is generated based on the first data flow link, and the second determining unit is configured to determine the first data flow link based on the head service node and the tail service node.

Optionally, the apparatus 2000 further includes a third determining unit. The third determining unit is configured to: before the second determining unit determines the first data flow link, determine the head service node and/or the tail service node based on second user configuration information.

For example, the second user configuration information may include the user configuration information in the method 600.

Optionally, the apparatus 2000 includes a third obtaining unit and a fourth determining unit. The third obtaining unit is configured to: before the second determining unit determines the first data flow link, obtain information about a message channel of a third service node on the first data flow link. The fourth determining unit is configured to determine a dependency relationship of the third service node. The second determining unit is configured to determine the first data flow link based on the head service node, the tail service node, the information about the message channel of the third service node, and the dependency relationship of the third service node.

Optionally, the apparatus 2000 is associated with an autonomous driving operating system.

Optionally, the autonomous driving operating system is associated with at least one of the following: an automotive open system architecture communication management AUTOSAR CM module and a robot operating system ROS.

For example, the first obtaining unit 2010, the recording unit 2020, the second obtaining unit 2030, and the first determining unit 2040 may be disposed in the computing platform 150 shown in FIG. 1, or may be disposed in the online delay analysis module 223 shown in FIG. 2 to FIG. 4(b), and more specifically, may be disposed in the delay statistical indicator mapping module 2231 and/or the link delay calculation module 2232 shown in FIG. 3 or FIG. 4(a) and FIG. 4(b).

For example, the processing unit is disposed in the computing platform 150 shown in FIG. 1, or may be disposed in the communication middleware 222 shown in FIG. 2 to FIG. 4(b), and more specifically, may be disposed in the communication delay module 2222 shown in FIG. 3 or FIG. 4(a) and FIG. 4(b).

For example, the second determining unit is disposed in the computing platform 150 shown in FIG. 1, or may be disposed in the key link analysis module 221 shown in FIG. 2 to FIG. 4(b), and more specifically, may be disposed in the dynamic code analysis module 2211 or the static code analysis module 2212 shown in FIG. 3 or FIG. 4(a) and FIG. 4(b).

For example, the third determining unit is disposed in the computing platform 150 shown in FIG. 1, or may be disposed in the key link analysis module 221 shown in FIG. 2 to FIG. 4(b), and more specifically, may be disposed in the link delay calculation module 2232 shown in FIG. 3 or FIG. 4(a) and FIG. 4(b).

For example, the third obtaining unit and the fourth determining unit are disposed in the computing platform 150 shown in FIG. 1, or may be disposed in the key link analysis module 221 shown in FIG. 2 to FIG. 4(b), and more specifically, may be disposed in the static code analysis module 2212 shown in FIG. 3 or FIG. 4(a) and FIG. 4(b).

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a storage. The storage stores instructions, and the processor invokes the instructions stored in the storage, to implement any one of the foregoing methods or implement functions of the units of the apparatus. The processor is, for example, a general-purpose processor, for example, a CPU or a microprocessor, and the storage is a storage inside the apparatus or a storage outside the apparatus. Alternatively, the units of the apparatus may be implemented in a form of hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units are integrated together and implemented in a form of system on a chip (system on a chip, SOC). The SoC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, operations performed by the first obtaining unit 2010, the recording unit 2020, the second obtaining unit 2030, and the first determining unit 2040 may be performed by one processor, or may be performed by different processors. In addition, operations performed by the first obtaining unit 2010, the recording unit 2020, the second obtaining unit 2030, and the first determining unit 2040, the processing unit, the second determining unit, the third determining unit, the fourth determining unit, and the third obtaining unit may be performed by a same processor, or may be performed by different processors. In a specific implementation process, the one or more processors may be processors disposed in the computing platform 150 shown in FIG. 1. In some possible implementations, the apparatus 2000 may be a chip disposed in the intelligent driving device 100.

FIG. 13 is a block diagram of a delay determining apparatus according to an embodiment of this application. The delay determining apparatus 2100 shown in FIG. 13 may include a processor 2110, a transceiver 2120, and a storage 2130. The processor 2110, the transceiver 2120, and the storage 2130 are connected through an internal connection path. The storage 2130 is configured to store instructions. The processor 2110 is configured to execute the instructions stored in the storage 2130, to implement the delay determining methods in the foregoing embodiments. Optionally, the storage 2130 may be coupled to the processor 2110 by using an interface, or may be integrated with the processor 2110.

The transceiver 2120 may include but is not limited to, a transceiver apparatus like an input/output interface (input/output interface), to implement communication between the apparatus 2100 and another device or a communication network.

The storage 2130 may be a read only memory (read only memory, ROM), a static storage device, a dynamic storage device, or a random-access memory (random-access memory, RAM).

The transceiver 2120 uses, for example, but is not limited to, a transceiver apparatus of a transceiver type, to implement communication between the apparatus 2100 and another device or a communication network, to receive/send data/information used to implement the delay determining methods in the foregoing embodiments.

In a specific implementation process, the apparatus 2100 may be disposed in the computing platform 150 shown in FIG. 1, or the apparatus 2100 may be disposed in the online delay analysis module 223 shown in FIG. 2 to FIG. 4(b).

An embodiment of this application further provides a delay determining system, including a link analysis apparatus and a delay determining apparatus. The link analysis apparatus is configured to determine, based on information about a head service node and/or a tail service node, a first data flow link including the head service node and the tail service node. The delay determining apparatus is configured to: when the tail service node sends a message including a first control instruction, or when the tail service node receives a message used to generate the first control instruction, obtain a first message sent by the tail service node, and record a first moment at which the first message is obtained; obtain first delay information from the first message, where the first delay information is used to determine a second moment at which the head service node sends first data, and the first data is used to generate the first control instruction; and determine a first end-to-end delay of the first data flow link based on the first moment and the second moment.

For example, the link analysis apparatus may include the key link analysis module 221 in FIG. 2 to FIG. 4(b), and the delay determining apparatus may include the online delay analysis module 223 in FIG. 2 to FIG. 4(b).

An embodiment of this application further provides an intelligent driving device. The intelligent driving device includes the apparatus 2000, the apparatus 2100, or the delay determining system.

**In** some possible implementations, the intelligent driving device may be a vehicle.

An embodiment of this application further provides a computer program product. The computer program product includes computer program code. When the computer program code is run on a computer, the computer is enabled to implement the delay determining methods in the foregoing embodiments of this application.

An embodiment of this application further provides a computer-readable storage medium. The computer-readable medium stores computer instructions. When the computer instructions are run on a computer, the computer is enabled to implement the delay determining methods in the foregoing embodiments of this application.

An embodiment of this application further provides a chip, including a circuit, configured to perform the delay determining methods in the foregoing embodiments of this application.

**In** an implementation process, steps in the foregoing methods may be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random-access memory, a flash memory, a read-only memory, a programmable read-only memory, an electrically erasable programmable memory, or a register. The storage medium is located in the storage, and a processor reads information in the storage and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A delay determining method, comprising:
when a tail service node on a first data flow link sends a message comprising a first control instruction, or when the tail service node receives a message used to generate the first control instruction, obtaining a first message sent by the tail service node, and recording a first moment at which the first message is obtained;
obtaining first delay information from the first message, wherein the first delay information is used to determine a second moment at which a head service node on the first data flow link sends first data, and the first data is used to generate the first control instruction; and
determining a first end-to-end delay of the first data flow link based on the first moment and the second moment.

2. The method according to claim 1, wherein the head service node comprises a first node and a second node, the first delay information is used to determine the second moment at which the first node sends the first data and a third moment at which the second node sends second data, the second data is used to generate the first control instruction, and the determining a first end-to-end delay of the first data flow link based on the first moment and the second moment comprises:
determining a first delay of a first sub-link based on the first moment and the second moment, wherein the first sub-link comprises the first node and the tail service node;
determining a second delay of a second sub-link based on the first moment and the third moment, wherein the second sub-link comprises the second node and the tail service node; and
determining the first end-to-end delay based on the first delay and the second delay.

3. The method according to claim 1, wherein the head service node comprises a third node and a fourth node, the first delay information is used to determine the second moment at which the third node sends the first data, and the method further comprises:
obtaining second delay information based on the first delay information, wherein the second delay information is used to determine a fourth moment at which the fourth node sends third data, and the third data is used to generate the first control instruction; and
the determining a first end-to-end delay of the first data flow link based on the first moment and the second moment comprises:
determining a third delay of a third sub-link based on the first moment and the second moment, wherein the third sub-link comprises the third node and the tail service node;
determining a fourth delay of a fourth sub-link based on the first moment and the fourth moment, wherein the fourth sub-link comprises the fourth node and the tail service node; and
determining the first end-to-end delay based on the third delay and the fourth delay.

4. The method according to claim 3, wherein the second delay information is generated when a first receiving port and/or a second receiving port of an intermediate service node receive/receives the message, the intermediate service node is a service node shared by the third sub-link and the fourth sub-link, the first receiving port is configured to receive a message transmitted on the third sub-link, and the second receiving port is configured to receive a message transmitted on the fourth sub-link.

5. The method according to any one of claims 1 to 4, wherein the determining a first end-to-end delay of the first data flow link comprises:
determining a first statistical indicator based on first user configuration information; and
determining the first end-to-end delay based on the first statistical indicator, wherein
the first statistical indicator is associated with at least one of the following: an average delay of the first data flow link, a maximum response delay of the first data flow link, and a minimum response delay of the first data flow link.

6. The method according to any one of claims 1 to 5, wherein the first data flow link further comprises a first service node and a second service node, and before the obtaining a first message sent by the tail service node on the first data flow link, the method further comprises:
writing information about the second moment at which the head service node sends the first data into a second message sent by the first service node to the second service node.

7. The method according to any one of claims 1 to 6, wherein the first delay information is generated based on the first data flow link, and the method further comprises:
determining the first data flow link based on the head service node and the tail service node.

8. The method according to claim 7, wherein before the determining the first data flow link, the method further comprises:
determining the head service node and/or the tail service node based on second user configuration information.

9. The method according to claim 7, wherein before the determining the first data flow link, the method further comprises:
obtaining information about a message channel of a third service node on the first data flow link; and
determining a dependency relationship of the third service node; and
the determining the first data flow link comprises:
determining the first data flow link based on the head service node, the tail service node, the information about the message channel of the third service node, and the dependency relationship of the third service node.

10. The method according to any one of claims 1 to 9, wherein the method is performed by an autonomous driving operating system.

11. The method according to claim 10, wherein the autonomous driving operating system is associated with at least one of the following: an automotive open system architecture communication management AUTOSAR CM module and a robot operating system ROS.

12. A delay determining apparatus, comprising a first obtaining unit, a recording unit, a second obtaining unit, and a first determining unit, wherein
the first obtaining unit is configured to: when a tail service node on a first data flow link sends a message comprising a first control instruction, or when the tail service node receives a message used to generate the first control instruction, obtain a first message sent by the tail service node;
the recording unit is configured to record a first moment at which the first message is obtained; the second obtaining unit is configured to obtain first delay information from the first message, wherein the first delay information is used to determine a second moment at which a head service node on the first data flow link sends first data, and the first data is used to generate the first control instruction; and
the first determining unit is configured to determine a first end-to-end delay of the first data flow link based on the first moment and the second moment.

13. The apparatus according to claim 12, wherein the head service node comprises a first node and a second node, the first delay information is used to determine the second moment at which the first node sends the first data and a third moment at which the second node sends second data, the second data is used to generate the first control instruction, and the first determining unit is configured to:
determine a first delay of a first sub-link based on the first moment and the second moment, wherein the first sub-link comprises the first node and the tail service node;
determine a second delay of a second sub-link based on the first moment and the third moment, wherein the second sub-link comprises the second node and the tail service node; and
determine the first end-to-end delay based on the first delay and the second delay.

14. The apparatus according to claim 12, wherein the head service node comprises a third node and a fourth node, the first delay information is used to determine the second moment at which the third node sends the first data, and the second obtaining unit is further configured to:
obtain second delay information based on the first delay information, wherein the second delay information is used to determine a fourth moment at which the fourth node sends third data, and the third data is used to generate the first control instruction; and
the first determining unit is configured to:
determine a third delay of a third sub-link based on the first moment and the second moment, wherein the third sub-link comprises the third node and the tail service node;
determine a fourth delay of a fourth sub-link based on the first moment and the fourth moment, wherein the fourth sub-link comprises the fourth node and the tail service node; and
determine the first end-to-end delay based on the third delay and the fourth delay.

15. The apparatus according to claim 14, wherein the second delay information is generated when a first receiving port and/or a second receiving port of an intermediate service node receive/receives the message, the intermediate service node is a service node shared by the third sub-link and the fourth sub-link, the first receiving port is configured to receive a message transmitted on the third sub-link, and the second receiving port is configured to receive a message transmitted on the fourth sub-link.

16. The apparatus according to any one of claims 12 to 15, wherein the first determining unit is configured to:
determine a first statistical indicator based on first user configuration information; and
determine the first end-to-end delay based on the first statistical indicator, wherein
the first statistical indicator is associated with at least one of the following: an average delay of the first data flow link, a maximum response delay of the first data flow link, and a minimum response delay of the first data flow link.

17. The apparatus according to any one of claims 12 to 16, wherein the first data flow link further comprises a first service node and a second service node, and the apparatus further comprises a processing unit, configured to:
before the first obtaining unit obtains the first message sent by the tail service node on the first data flow link, write information about the second moment at which the head service node sends the first data into a second message sent by the first service node to the second service node.

18. The apparatus according to any one of claims 12 to 17, wherein the apparatus further comprises a second determining unit, the first delay information is generated based on the first data flow link, and the second determining unit is configured to:
determine the first data flow link based on the head service node and the tail service node.

19. The apparatus according to claim 18, wherein the apparatus further comprises a third determining unit, and the third determining unit is configured to:
before the second determining unit determines the first data flow link, determine the head service node and/or the tail service node based on second user configuration information.

20. The apparatus according to claim 18, wherein the apparatus comprises a third obtaining unit and a fourth determining unit, and the third obtaining unit is configured to:
before the second determining unit determines the first data flow link, obtain information about a message channel of a third service node on the first data flow link;
the fourth determining unit is configured to determine a dependency relationship of the third service node; and
the second determining unit is configured to:
determine the first data flow link based on the head service node, the tail service node, the information about the message channel of the third service node, and the dependency relationship of the third service node.

21. The apparatus according to any one of claims 12 to 20, wherein the apparatus is associated with an autonomous driving operating system.

22. The apparatus according to claim 21, wherein the autonomous driving operating system is associated with at least one of the following: an automotive open system architecture communication management AUTOSAR CM module and a robot operating system ROS.

23. A delay determining apparatus, comprising:
a storage, configured to store a computer program; and
a processor, configured to execute the computer program stored in the storage, for the apparatus to perform the method according to any one of claims 1 to 11.

24. A delay determining system, comprising a link analysis apparatus and a delay determining apparatus, wherein
the link analysis apparatus is configured to determine, based on information about a head service node and/or a tail service node, a first data flow link comprising the head service node and the tail service node;
the delay determining apparatus is configured to: when the tail service node sends a message comprising a first control instruction, or when the tail service node receives a message used to generate the first control instruction, obtain a first message sent by the tail service node, and record a first moment at which the first message is obtained; obtain first delay information from the first message, wherein the first delay information is used to determine a second moment at which the head service node sends first data, and the first data is used to generate the first control instruction; and determine a first end-to-end delay of the first data flow link based on the first moment and the second moment.

25. An intelligent driving device, comprising the apparatus according to any one of claims 12 to 23 or the system according to claim 24.

26. A computer-readable storage medium, wherein the computer-readable storage medium stores instructions, and when the instructions are executed by a processor, the processor is enabled to implement the method according to any one of claims 1 to 11.

27. A chip, wherein the chip comprises a circuit, and the circuit is configured to perform the method according to any one of claims 1 to 11.
